(19) Europäisches Patentamt / European Patent Office / Office européen des brevets

(11) **EP 4 510 590 A1**

(12) **EUROPEAN PATENT APPLICATION**
published in accordance with Art. 153(4) EPC


(43) Date of publication:
**19.02.2025 Bulletin 2025/08**

(21) Application number: **22936847.7**

(22) Date of filing: **12.04.2022**

(51) International Patent Classification (IPC):
***H04N 19/82*** *(2014.01)*

(52) Cooperative Patent Classification (CPC):
**H04N 19/82**

(86) International application number:
**PCT/CN2022/086470**

(87) International publication number:
**WO 2023/197193 (19.10.2023 Gazette 2023/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**



(71) Applicant: **GUANGDONG OPPO MOBILE TELECOMMUNICATIONS CORP., LTD.**
**Dongguan, Guangdong 523860 (CN)**

(72) Inventors:
- **HUO, Junyan**
  **Dongguan, Guangdong 523860 (CN)**
- **MA, Yanzhuo**
  **Dongguan, Guangdong 523860 (CN)**
- **YANG, Fuzheng**
  **Dongguan, Guangdong 523860 (CN)**
- **ZHANG, Zhenyao**
  **Dongguan, Guangdong 523860 (CN)**
- **LI, Ming**
  **Dongguan, Guangdong 523860 (CN)**

(74) Representative: **Penza, Giancarlo**
**Bugnion S.p.A.**
**Viale Lancetti, 17**
**20158 Milano (IT)**


(54) **CODING METHOD AND APPARATUS, DECODING METHOD AND APPARATUS, AND CODING DEVICE, DECODING DEVICE AND STORAGE MEDIUM**


(57) Disclosed in the embodiments of the present application are a coding method and apparatus, a decoding method and apparatus, and a coding device, a decoding device and a storage medium. The decoding method comprises: determining a first decoding parameter according to a template region; determining a reference sample value of a first color component of the current block; according to the reference sample value of the first color component of the current block and the first decoding parameter, determining a first weighting coefficient; and according to the first weighting coefficient and a reference sample value of a second color component of the current block, determining a first predicted value of the second color component of the current block.


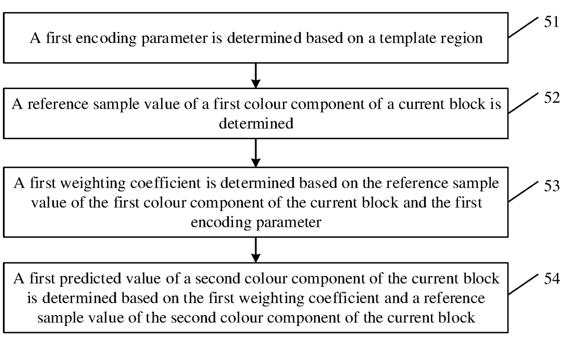


**FIG. 5**

EP 4 510 590 A1

## Description

### TECHNICAL FIELD

Embodiments of the disclosure relate to the field of video coding technologies, and in particular to encoding and decoding methods, apparatuses, an encoding device, a decoding device, and a storage medium.

### BACKGROUND

With the improvement of people's requirements for video display quality, new video application forms such as high-definition and ultra-high-definition videos have emerged. The Joint Video Exploration Team (JVET) of International Standard Organization ISO/IEC and ITU-T has developed the next generation video coding standard H.266/Versatile Video Coding (VVC).

H.266/VVC includes cross-colour component prediction techniques. However, there is a large deviation between the predicted value of the current block calculated by the cross-colour component prediction techniques of the H.266/VVC and the original value, which leads to low prediction accuracy, quality decline of the decoded video and degradation of coding performance.

### SUMMARY

Embodiments of the disclosure provide encoding and decoding methods, apparatuses, an encoding device, a decoding device, and a storage medium, which may improve prediction accuracy of a second colour component, thereby saving the bit rate and improving encoding and decoding performance.

In a first aspect, an embodiment of the disclosure provides a decoding method. The method includes the following operations. A first decoding parameter is determined based on a template region. A reference sample value of a first colour component of a current block is determined. A first weighting coefficient is determined based on the reference sample value of the first colour component of the current block and the first decoding parameter. A first predicted value of a second colour component of the current block is determined based on the first weighting coefficient and a reference sample value of the second colour component of the current block.

In a second aspect, an embodiment of the disclosure provides an encoding method. The method includes the following operations. A first encoding parameter is determined based on a template region. A reference sample value of a first colour component of a current block is determined. A first weighting coefficient is determined based on the reference sample value of the first colour component of the current block and the first encoding parameter. A first predicted value of a second colour component of the current block is determined based on the first weighting coefficient and a reference sample value of the second colour component of the current block. In this way, the first encoding parameter is determined based on the template region. Based on this, the first weighting coefficient that conforms better with the characteristics of the current block may be obtained, which improves the prediction accuracy of the second colour component of the current block, thereby saving the bit rate and improving the coding performance.

In a third aspect, an embodiment of the disclosure provides an encoding apparatus including a first determination module, a second determination module, a third determination module and a first prediction module. The first determination module is configured to determine a first encoding parameter based on a template region. The second determination module is configured to determine a reference sample value of a first colour component of a current block. The third determination module is configured to determine a first weighting coefficient based on the reference sample value of the first colour component of the current block and the first encoding parameter. The first prediction module is configured to determine a first predicted value of a second colour component of the current block based on the first weighting coefficient and a reference sample value of the second colour component of the current block.

In a fourth aspect, an embodiment of the disclosure provides an encoding device including a first memory and a first processor. The first memory is configured to store a computer program executable on the first processor. The first processor is configured to perform, when executing the computer program, the method in the second aspect.

In a fifth aspect, an embodiment of the disclosure provides a decoding apparatus including a fourth determination module, a fifth determination module, a sixth determination module and a second prediction module. The fourth determination module is configured to determine a first decoding parameter based on a template region. The fifth determination module is configured to determine a reference sample value of a first colour component of a current block. The sixth determination module is configured to determine a first weighting coefficient based on the reference sample value of the first colour component of the current block and the first decoding parameter. The second prediction module is configured to determine a first predicted value of a second colour component of the current block based on the first weighting coefficient and a reference sample value of the second colour component of the current block.

In a sixth aspect, an embodiment of the disclosure provides a decoding device including a second memory and a second processor. The second memory is configured to store a computer program executable on the second processor. The second processor is configured to perform, when executing the computer program, the method in the first aspect.

In a seventh aspect, an embodiment of the disclosure provides a computer-readable storage medium having stored a computer program thereon. The computer program, when executed, implements the method in the first aspect or implements the method in the second aspect.

## BRIEF DESCRIPTION OF THE DRAWINGS

FIG. 1 is a schematic diagram of a distribution of effective neighbouring regions.
FIG. 2 is a schematic diagram of a distribution of selected regions under different prediction modes.
FIG. 3 is a schematic flowchart of a model parameter derivation method.
FIG. 4A is a schematic composition block diagram of an encoder provided by an embodiment of the disclosure.
FIG. 4B is a schematic composition block diagram of a decoder provided by an embodiment of the disclosure.
FIG. 5 is a schematic flowchart of an implementation of an encoding method provided by an embodiment of the disclosure.
FIG. 6 is a schematic diagram of positions of neighbouring regions of a current block provided by an embodiment of the disclosure.
FIG. 7 is a schematic diagram of an example in which an above template and a left template do not border on a current block provided by an embodiment of the disclosure.
FIG. 8 is a schematic diagram of an example in which different types of templates border on a current block provided by an embodiment of the disclosure.
FIG. 9 is a schematic flowchart of an implementation of an operation 51 provided by an embodiment of the disclosure.
FIG. 10 is a schematic diagram of an example in which a left template overlaps with a reference region provided by an embodiment of the disclosure.
FIG. 11 is a schematic diagram of another example of a reference region of a left template and a right template provided by an embodiment of the disclosure.
FIG. 12A is a schematic diagram of yet another example of a reference region of a left template and a right template provided by an embodiment of the disclosure.
FIG. 12B is a schematic diagram of a prediction process for Weighted Chroma Prediction (WCP) provided by an embodiment of the disclosure.
FIG. 13 is a schematic flowchart of an implementation of a decoding method provided by an embodiment of the disclosure.
FIG. 14 is a schematic diagram of a prediction process of a WCP technology provided by an embodiment of the disclosure.
FIG. 15 is a schematic diagram of an example of a reference region of a current block provided by an embodiment of the disclosure.
FIG. 16 is a schematic flowchart of an implementation of an operation 143 provided by an embodiment of the disclosure.
FIG. 17 is a schematic flowchart of an implementation of an operation 144 provided by an embodiment of the disclosure.
FIG. 18 is a schematic structural diagram of an encoding apparatus provided by an embodiment of the disclosure.
FIG. 19 is a schematic diagram of a specific hardware structure of an encoding device provided by an embodiment of the disclosure.
FIG. 20 is a schematic diagram of a composition structure of a decoding apparatus provided by an embodiment of the disclosure.
FIG. 21 is a schematic diagram of a specific hardware structure of a decoding device provided by an embodiment of the disclosure.
FIG. 22 is a schematic diagram of a composition structure of an encoding and decoding system provided by an embodiment of the disclosure.

## DETAILED DESCRIPTION

In order to understand features and technical contents of the embodiments of the disclosure in more detail, the implementation of the embodiments of the disclosure will be described in detail below with reference to the drawings. The drawings are for reference and illustration only, and are not intended to limit the embodiments of the disclosure.

Unless otherwise defined, all technical and scientific terms used herein have the same meaning as commonly understood by those skilled in the art belonging to the disclosure. The terms used herein are for the purpose of describing the embodiments of the disclosure only, and are not intended to limit the disclosure.

In the following description, reference to "some embodiments" describes a subset of all possible embodiments, but it is to be understood that "some embodiments" may be the same subset or different subsets of all possible embodiments, and may be combined with each other without conflict. It is further to be noted that terms "first/second/third" referred to in the embodiments of the disclosure are only used to distinguish similar objects, and do not represent a specific order for the objects. It is to be understood that the specific order or priority order of "first/second/third" may be interchanged where allowed, such that the embodiments of the disclosure described herein may be implemented in an order other than that illustrated or described herein.

In a video picture, three colour components are generally used to represent a Coding Block (CB). The three colour components are a luma component, a blue chroma component and a red chroma component. Exemplarily, the luma component is generally represented as a symbol Y, the blue chroma component is generally represented as a symbol Cb or U, and the red chroma component is generally represented as a symbol Cr or V. In this way, the video picture may be represented in a YCbCr format or in a YUV format. In addition, the video picture may be in an RGB format, a YCgCo format, or the like, which is not limited by the embodiments of the disclosure.

It is to be understood that in the current video picture or video encoding and decoding process, the cross-component prediction technology mainly includes a Cross-component Linear Model (CCLM) prediction mode and a Multi-Directional Linear Model (MDLM) prediction mode. A prediction model, corresponding to model parameters derived based on either the CCLM prediction mode or the MDLM prediction mode, may achieve prediction between colour components, such as the first colour component to the second colour component, the second colour component to the first colour component, the first colour component to the third colour component, the third colour component to the first colour component, the second colour component to the third colour component, or the third colour component to the second colour component.

Taking the prediction from the first colour component to the second colour component as an example, it is assumed that the first colour component is a luma component and the second colour component is a chroma component. In order to reduce redundancy between the luma component and the chroma component, the CCLM prediction mode is used in the VVC, that is, a predicted value of the chroma is constructed based on the reconstructed luma value of the same coding block, for example, $Pred_C(i,j) = \alpha \cdot RecL(i,j) + \beta$.

Here, $i$, $j$ represents position coordinates of a to-be-predicted sample in the coding block, i indicates the horizontal direction, and $j$ represents the vertical direction. $Pred_C(i,j)$ represents a predicted chroma value corresponding to the to-be-predicted sample with the position coordinates $(i,j)$ in the coding block. $Rec_L(i,j)$ represents a (down-sampled) reconstructed luma value corresponding to the to-be-predicted sample with the position coordinates $(i,j)$ in the same coding block. In addition, $\alpha$ and $\beta$ represent model parameters, which may be derived from reference samples.

For the coding block, the neighbouring regions thereof may be divided into five parts: a left neighbouring region, a top neighbouring region, a bottom left neighbouring region, a top left neighbouring region, and a top right neighbouring region. The H.266/VVC includes three cross-component linear model prediction modes, namely, an intra CCLM prediction mode using the left and top neighbouring regions (which may be represented as INTRA_LT_CCLM), an intra CCLM prediction mode using the left and bottom left neighbouring regions (which may be represented as INTRA_L_CCLM), and an intra CCLM prediction mode using the top and top right neighbouring regions (which may be represented as INTRA_T_CCLM). In each of the three prediction modes, a preset number (such as four) of reference samples may be selected for derivation of the model parameters $\alpha$ and $\beta$. The biggest difference of the three prediction modes is that the reference samples used to derive the model parameters $\alpha$ and $\beta$ correspond to different selected regions.

Specifically, the size of the coding block corresponding to the chroma component is $W \times H$. It is assumed that the top selected region corresponding to the reference samples is W', and the left selected region corresponding to the reference samples is H'.

In this way, for the INTRA_LT_CCLM mode, the reference samples may be selected in the top neighbouring region and the left neighbouring region, i.e., W' = W, H' = H. For the INTRA_L_CCLM mode, the reference samples may be selected in the left neighbouring region and the bottom left neighbouring region, i.e. H' = W + H, and W' = 0 is set. For the INTRA_T_CCLM mode, the reference samples may be selected in the top neighbouring region and the top right neighbouring region, i.e. W' = W + H, and H' = 0 is set.

It is to be noted that in VTM 5.0, at most only samples of the range W are stored in the top right neighbouring region, and at most only samples of the range H are stored in the bottom left neighbouring region. Therefore, although the ranges of the selected regions for the INTRA_L_CCLM mode and the INTRA_T_CCLM mode are defined as W + H, in a practical application, the selected region for the INTRA_L_CCLM mode will be limited within H + H, and the selected region for the INTRA_T_CCLM mode will be limited within W+W.

In this way, for the INTRA_L_CCLM mode, the reference samples may be selected in the left neighbouring region and the bottom left neighbouring region, and H' = min {W + H, H + H}.

For the INTRA_T_CCLM mode, the reference samples may be selected in the top neighbouring region and the top right neighbouring region, and W' = min {W + H, W + W}.

Referring to FIG. 1, a schematic diagram of a distribution of effective neighbouring regions is illustrated. In FIG. 1, the left neighbouring region, the bottom left neighbouring region, the top neighbouring region, and the top right neighbouring region are all valid. In addition, the block filled in gray is the to-be-predicted sample with the position coordinates (*i,j*) in the coding block.

In this way, on the basis of FIG. 1, the selected regions for the three prediction modes are illustrated in FIG. 2. In FIG. 2, (a) illustrates the selected region for the INTRA_LT_CCLM mode, including the left neighbouring region and the top neighbouring region. (b) illustrates the selected region for the INTRA_L_CCLM mode, including the left neighbouring region and the bottom left neighbouring region. (c) illustrates the selected region for the INTRA_T_CCLM mode, including the top neighbouring region and the top right neighbouring region. In this way, after the selected regions for the three prediction modes are determined, sample selection for model parameter derivation may be performed within the selected regions. Samples selected in this way may be referred to as reference samples, and the number of reference samples is usually 4. For a size-determined W × H coding block, the position of the reference samples is generally determined.

After the preset number of reference samples are acquired, chroma prediction is currently performed based on the schematic flowchart of the model parameter derivation method illustrated in FIG. 3. Based on the flow illustrated in FIG. 3, assuming that the preset number is 4, the flow may include the following operations.

In operation S301, the reference samples are acquired in the selected region.

In operation S302, the number of valid reference samples is determined.

In operation S303, if the number of valid reference samples is 0, the model parameter $\alpha$ is set to 0, and $\beta$ is set to the default value.

In operation S304, the predicted chroma value is filled as the default value.

In operation S305, if the number of valid reference samples is 4, two reference samples having larger values and two reference samples having smaller values in the luma component are obtained by comparison.

In operation S306, a mean point corresponding to the larger values and a mean point corresponding to the smaller values are calculated.

In operation S307, the model parameters $\alpha$ and β are derived based on the two mean points.

In operation S308, the chroma prediction is performed using a prediction model constructed by α and β.

It is to be noted that in the VVC, the operation that the number of the valid reference samples is 0 is determined based on the validity of the neighbouring region.

It is further to be noted that the principle of "two points determine a straight line" is used to construct the prediction model, and the two points here may be referred to as fitting points. In the current technical solution, after four reference samples are acquired, two reference samples having larger values and two reference samples having smaller values in the luma component are obtained by comparison. Then, a mean point (which may be represented as $mean_{max}$) is calculated based on the two reference samples with the larger values, and another mean point (which may be represented as $mean_{min}$) is calculated based on the two reference samples with the smaller values. In this way, two mean points $mean_{max}$ and $mean_{min}$ may be obtained. Then, the model parameters (which may be represented as α and β) may be derived by taking $mean_{max}$ and $mean_{min}$ as two fitting points. Finally, a prediction model is constructed based on $\alpha$ and $\beta$ , and prediction processing of the chroma component is performed based on the prediction model.

However, in the related art, a simple linear model $Pred_C(i,j) = \alpha \cdot Rec_L(i,j) + \beta$ is used for each coding block to predict the chroma component, and the same model parameters $\alpha$ and $\beta$ are used for a sample at any position of each coding block for prediction. This will lead to the following defects. (1) Coding blocks with different content characteristics all use the simple linear model to perform mapping from luma to chroma to achieve the chroma prediction, but not the mapping function of luma to chroma in any coding block can be accurately fitted by the simple linear model, which leads to inaccurate prediction effect of some coding blocks. (2) During the prediction process, samples at different positions in the coding block all use the same model parameters α and β, and there is also a great difference in the prediction accuracy at different positions in the coding block. (3) During the CCLM prediction process, characteristics of coding blocks with different content and different sizes are not fully considered, which will lead to loss of high correlation between reconstructed luma information of the current block and reference information of the reference region, and thus some coding blocks cannot be accurately predicted under such technology, thereby affecting the gain effect of such technology. In short, there is a large deviation between the predicted value and the original value of some coding blocks under the related solution of the CCLM technology, which leads to low prediction accuracy and quality decline, thereby decreasing encoding and decoding efficiency.

Based on this, an embodiment of the disclosure provides encoding and decoding methods. The principles of the methods are the same regardless of the encoding end or the decoding end. Taking the encoding end as an example, a first encoding parameter is determined based on a template region. A reference sample value of a first colour component of a current block is determined. A first weighting coefficient is determined based on the reference sample value of the first colour component of the current block and the first encoding parameter. A first predicted value of a second colour component of the current block is determined based on the first weighting coefficient and a reference sample value of the second colour component of the current block. In this way, the first encoding parameter is determined based on the template region. Based on this, the first weighting coefficient that conforms better with the characteristics of the current block may be obtained, which improves the prediction accuracy of the second colour component of the current block, thereby saving the bit rate and improving the coding performance.

Hereinafter, the embodiments of the disclosure will be illustrated in detail with reference to the drawings.

Referring to FIG. 4A, a schematic composition block diagram of an encoder provided by an embodiment of the disclosure is illustrated. As illustrated in FIG. 4A, an encoder (specifically, a "video encoder") 100 may include a transform and quantization unit 101, an intra estimation unit 102, an intra prediction unit 103, a motion compensation unit 104, a motion estimation unit 105, an inverse transform and inverse quantization unit 106, a filter control analysis unit 107, a filtering unit 108, a coding unit 109, a decoded picture buffer unit 110, and the like. The filtering unit 108 may implement deblocking filtering and Sample Adaptive Offset (SAO) filtering, and the coding unit 109 may implement header information coding and Context-based Adaptive Binary Arithmetic Coding (CABAC). An input raw video signal is partitioned into Coding Tree Units (CTU) to obtain a video coding block. Residual sample information obtained by intra or inter prediction is then processed by the transform and quantization unit 101 to transform the video coding block, including transforming the residual information from a sample domain to a transform domain and quantizing an obtained transform coefficient to further reduce the bit rate. The intra estimation unit 102 and the intra prediction unit 103 are configured to perform intra prediction on the video coding block. Explicitly, the intra estimation unit 102 and the intra prediction unit 103 are configured to determine an intra prediction mode to be used to encode the video coding block. The motion compensation unit 104 and the motion estimation unit 105 are configured to perform inter prediction coding of the received video coding block relative to one or more blocks in one or more reference pictures to provide time prediction information. Motion estimation performed by the motion estimation unit 105 is a process of generating a motion vector. A motion of the video coding block may be estimated based on the motion vector, and motion compensation is then performed by the motion compensation unit 104 based on the motion vector determined by the motion estimation unit 105. After the intra prediction mode is determined, the intra prediction unit 103 is further configured to provide selected intra prediction data to the coding unit 109, and the motion estimation unit 105 also sends motion vector data determined by calculation to the coding unit 109. In addition, the inverse transform and inverse quantization unit 106 is configured to reconstruct the video coding block. A residual block is reconstructed in the sample domain, blocking effect artifacts in the reconstructed residual block are removed by the filter control analysis unit 107 and the filtering unit 108, and then the reconstructed residual block is added to a predictive block within a picture in the decoded picture buffer unit 110 to generate the reconstructed video coding block. The coding unit 109 is configured to encode various encoding parameters and the quantized transform coefficients. In the CABAC-based coding algorithm, the context content may be based on neighbouring coding blocks, and may be used to encode information indicating the determined intra prediction mode to output a bitstream of the video signal. The decoded picture buffer unit 110 is configured to store the reconstructed video coding block for prediction reference. As video pictures are encoded, new reconstructed video coding blocks may be continuously generated, and these reconstructed video coding blocks are stored in the decoded picture buffer unit 110.

Referring to FIG. 4B, a schematic composition block diagram of a decoder provided by an embodiment of the disclosure is illustrated. As illustrated in FIG. 4B, a decoder (specifically, a "video decoder") 200 includes a decoding unit 201, an inverse transform and inverse quantization unit 202, an intra prediction unit 203, a motion compensation unit 204, a filtering unit 205, a decoded picture buffer unit 206, and the like. The decoding unit 201 may implement header information decoding and CABAC decoding, and the filtering unit 205 may implement deblocking filtering and SAO filtering. After the input video signal is subjected to the encoding process of FIG. 4A, the bitstream of the video signal is output. The bitstream is input to the decoder 200 and is processed by the decoding unit 201 first to obtain a decoded transform coefficient. The transform coefficient is processed by the inverse transform and inverse quantization unit 202 to generate a residual block in the sample domain. The intra prediction unit 203 may be configured to generate prediction data of the current video decoding block based on the determined intra prediction mode and data from a previously decoded block of the current frame or picture. The motion compensation unit 204 determines prediction information for the video decoding block by analyzing the motion vector and other associated syntax elements, and generates a predictive block of the video decoding block that is being decoded by the prediction information. The residual block from the inverse transform and inverse quantization unit 202 and the corresponding predictive block generated by the intra prediction unit 203 or the motion compensation unit 204 are summed to form a decoded video block. The decoded video signal is processed by the filtering unit 205 to remove blocking effect artifacts, which may improve the video quality. The decoded video block is then stored in the decoded picture buffer unit 206, and the decoded picture buffer unit 206 stores reference pictures for subsequent intra prediction or motion compensation, and also for the output of the video signal. In this way, a recovered raw video signal is obtained.

It is to be noted that the method of the embodiments of the disclosure is mainly applied to the intra prediction unit 103 as illustrated in FIG. 4A and the intra prediction unit 203 as illustrated in FIG. 4B. In other words, the embodiments of the disclosure may be applied to the encoder or may be applied to the decoder, or may even be applied to both the encoder and the decoder simultaneously, which, however, is not specifically limited by the embodiments of the disclosure.

It is further to be noted that, when applied to the intra prediction unit 103, the "current block" specifically refers to a coding block on which intra prediction is currently to be performed. When applied to the intra prediction unit 203, the "current block" specifically refers to a decoding block on which intra prediction is currently to be performed.

Firstly, the encoding method provided by the embodiments of the disclosure is introduced. FIG. 5 is a schematic flowchart of an implementation of an encoding method provided by an embodiment of the disclosure. As illustrated in FIG. 5, the method may include the following operations 51 to 54.

In operation 51, a first encoding parameter is determined based on a template region.

In operation 52, a reference sample value of a first colour component of a current block is determined.

In operation 53, a first weighting coefficient is determined based on the reference sample value of the first colour component of the current block and the first encoding parameter.

In operation 54, a first predicted value of a second colour component of the current block is determined based on the first weighting coefficient and a reference sample value of the second colour component of the current block.

In the embodiment of the disclosure, the first encoding parameter is determined based on the template region, rather than being a preset fixed value. Therefore, the obtained first weighting coefficient conforms better with the characteristics of the current block, which may improve the accuracy of the second colour component of the current block, thereby saving the bit rate and improving the coding performance.

Hereinafter, further alternative implementations of each of the above operations, related terms, and/or the like will be illustrated.

In the operation 51, the first encoding parameter is determined based on the template region.

In the embodiment of the disclosure, the template region may include a partial region or an entire region of the current block, as well as a reference region of the current block. The template region may not include the current block, but instead include a reference region of the template region. In some embodiments, the template region is an encoded region.

The template region may be first determined. For example, the template region is determined based on sample availability of a neighbouring region of the current block. Based on a relative positional relationship with the current block, the neighbouring region includes at least one of: a top region of the current block, a left region of the current block, a top right region of the current block, a bottom left region of the current block, or a top left region of the current block.

It is to be understood that an unavailable sample is not set as a sample in the template region. In some embodiments, sample availability of a sample may be determined based on a position of the sample in the neighbouring region and/or a coding state of the sample. For example, if the position of the sample belongs to a defined edge region, it is determined that the sample is unavailable. In another example, if the coding state of the sample is uncoded, it is determined that the sample is unavailable. In yet another example, if the position of the sample belongs to the defined edge region and the coding state of the sample is uncoded, it is determined that the sample is unavailable.

In the embodiment of the disclosure, the neighbouring region of the current block may include a region bordering on the current block and/or a region not bordering on the current block. Taking the region bordering on the current block as an example, as illustrated in FIG. 6, the neighbouring region may include at least one of the regions of various orientations illustrated in the figure.

In another example, the template region may also be determined based on a template type included in a configured prediction mode.

In some embodiments, the template type includes at least one of: an above template, a left template, an above right template, a below left template, or an above left template.

Further, in some embodiments, a template included in the configured prediction mode may be taken as the template region.

The template region may include the region bordering on the current block, or may include the region not bordering on the current block. For example, FIG. 7 illustrates a case where the above template and the left template do not border on the current block. Further, FIG. 8 illustrates a case where the above template, the left template, the above right template, the below left template, and the above left template border on the current block.

It is to be noted that the width and height of the neighbouring region may be configured based on requirements of the bit rate and other indicators. Similarly, the width and height of the template region may also be configured based on requirements of the bit rate and other indicators.

After the template region is determined, in some embodiments, as illustrated in FIG. 9, the operation 51 may be implemented by the following operations 511 and 512.

In operation 511, a reference sample value of the template region is determined.

In some embodiments, the reference sample value of the template region includes a reconstructed value of a first colour component of the template region, a reconstructed value of a second colour component of the template region, a reconstructed value of a first colour component of the reference region of the template region, and a reconstructed value of a second colour component of the reference region of the template region.

The reference region of the template region varies with the type of the template region, and the template region is allowed to overlap with its reference region. In some embodiments, the reference region of the template region includes at least one of: a top neighbouring region of the template region, a bottom neighbouring region of the template region, a left neighbouring region of the template region, a right neighbouring region of the template region, or the template region. In case that the reference region of the template region includes the template region, the area of the reference region is larger than the area of the template region. In the embodiment of the disclosure, the sizes of the top, bottom, left, and right neighbouring regions of the template region are not limited, and the sizes of the neighbouring regions may be set in advance based on the type of the template region. The left and right edges of the top neighbouring region and the bottom neighbouring region of the template region may or may not be aligned with the left and right edges of the above template. Similarly, the top and bottom edges of the left neighbouring region and the right neighbouring region of the template region may or may not be aligned with the top and bottom edges of the left template.

For example, FIG. 10 illustrates an example in which the left template overlaps with the reference region and an example in which the right template overlaps with the reference region. As illustrated in FIG. 10, the reference region of the above template includes the above template, and the reference region of the left template includes the left template. Further, as illustrated in FIG. 11 which illustrates a reference region of the left and right templates, the reference region includes a top neighbouring region of the above template and a left neighbouring region of the left template. Further, as illustrated in FIG. 12A which illustrates a reference region of the left and right templates, the reference region includes a bottom neighbouring region of the above template and a right neighbouring region of the left template.

In operation 512, the first encoding parameter is determined based on the reference sample value of the template region.

In some embodiments, the operation 512 may be implemented by operations 5121 and 5122.

In operation 5121, a first difference of the template region is determined. The first difference of the template region is set to be equal to an absolute value of a difference between a reference value of the first colour component of the template region and a reference value of the first colour component of the reference region of the template region.

Further, in some embodiments, the reference value of the first colour component of the template region is the reconstructed value of the first colour component of the template region, or a value obtained by filtering the reconstructed value of the first colour component of the template region. The reference value of the first colour component of the reference region of the template region is the reconstructed value of the first colour component of the reference region of the template region, or a value obtained by filtering the reconstructed value of the first colour component of the reference region of the template region.

In operation 5122, the first encoding parameter is determined based on the first difference of the template region.

Further, in some embodiments, the first encoding parameter may be determined by querying a preset mapping table of the first difference and the first encoding parameter. The mapping table records the first encoding parameters, respectively corresponding to different first differences, that enable the bit rate to reach the maximum. In yet some embodiments, the operation 5122 may be implemented by operations 5122-1 to 5122-3.

In operation 5122-1, a second predicted value of the second colour component of the template region is determined based on the first difference and a candidate first encoding parameter.

In some embodiments, the second predicted value of the second colour component of the template region is set to be equal to a weighted sum of each reference value of the second colour component of the reference region of the template region and a respective second weighting coefficient.

Further, in some embodiments, the second weighting coefficient is determined using a preset correspondence based on the first difference of the template region and the candidate first encoding parameter.

In some embodiments, the preset correspondence is not limited, which may be various types of function models. The candidate first encoding parameter is a model parameter of the function model, which affects the magnitude of the second weighting coefficient. The preset correspondence may also be obtained by a function model, for example, the preset correspondence is a second weighting coefficient corresponding to the first difference and the candidate first encoding parameter.

Further, in some embodiments, the preset correspondence is a softmax function. An input of the softmax function is one of: a ratio of the first difference to the candidate first encoding parameter, a product of the first difference and the candidate first encoding parameter, or a value obtained by bit-shifting the first difference. The number of bits of the bit-shifting is equal to the candidate first encoding parameter. The direction of the bit-shifting may be left or right.

For example, the following equation (1) illustrates an example of the softmax function.

$$\mathrm{cTempWeight}[i][j][k] = \frac{e^{\frac{-\mathrm{diffTempY}[i][j][k]}{T}}}{\sum_{n=0}^{\mathrm{inTempSize}-1} e^{\frac{-\mathrm{diffTempY}[i][j][n]}{T}}} \qquad (1).$$

Here,[i] represents the abscissa of the sample with the sample coordinates (i, j) in the template region, and [j] represents the ordinate of the sample with the sample coordinates (i, j) in the template region. cTempWeight[i] [j] [k] represents the second weighting coefficient of the k-th sample in the reference region of the template region corresponding to the sample with the sample coordinates (i, j) in the template region. diffTempY[i][j] [k] represents the absolute value of the difference between the reference value of the first colour component of the sample with the sample coordinates (i, j) in the template region and the reference value of the first colour component of the k-th sample in the reference region of the template region corresponding to the sample with the sample coordinates (i, j) in the template region. inTempSize represents the number of samples in the reference region of the template region. T represents the candidate first encoding parameter. The calculation equation of diffTempY[i] [j] [k] is shown in the following equation (2).

$$\mathrm{diffTempY[i][j][k]} = \mathrm{abs(refTempY[k]} - \mathrm{recTempY[i][j])} \qquad (2).$$

Here, refTempY[k] represents the reference value of the first colour component of the k-th sample in the reference region of the template region, and recTempY[i][j] represents the reference value of the first colour component of the sample with the sample coordinates (i, j) in the template region.

Based on this, the second predicted value of the second colour component of the sample with the sample coordinates (i, j) in the template region is calculated as illustrated in equation (3).

$$C_{i,j}^{\mathrm{predT}} = \sum_{k=0}^{\mathrm{inTempSize}-1} \mathrm{cTempWeight[i][j][k]refTempC[k]} \qquad (3).$$

That is, the second predicted value of the second colour component of the sample with the sample coordinates (i, j) in the template region is set to be equal to a weighted sum of the reference value of the second colour component of each sample in the reference region of the template region and the respective second weighting coefficient.

In some embodiments, the preset correspondence may also be obtained using a softmax function. The preset correspondence (for example, a preset mapping table) may be obtained by calculation in advance based on the softmax function. Then, when the second weighting coefficient is to be determined, the second weighting coefficient corresponding to the first difference of the template region and the candidate decoding parameter may be obtained by querying the preset correspondence.

In some embodiments, the candidate first encoding parameter includes one or more candidate first encoding parameters. For each candidate first encoding parameter, a respective first prediction error may be obtained by calculation by operations 5122-1 and 5122-2.

In operation 5122-2, a first prediction error of the second colour component of the template region is determined. The first prediction error is an error between a reference value of the second colour component of the template region and the second predicted value of the second colour component of the template region. The reference value of the second colour component of the template region is the reconstructed value of the second colour component of the template region, or a value obtained by filtering the reconstructed value of the second colour component of the template region.

In some embodiments, a second predicted value for determining the first prediction error is set to be equal to a second predicted value obtained by performing a refinement operation on the second predicted value of the second colour component of the template region.

In operation 5122-3, the first encoding parameter is determined based on the first prediction error.

In the embodiments of the disclosure, the embodiment for implementing the operation 5122-3 is not limited, and there may be various embodiments. For example, the operation 5122-3 may be implemented by any one of the following embodiments 1 to 4.

In embodiment 1, the operation 5122-3 may be implemented as follows. The first encoding parameter is set to be equal to: a value of the corresponding candidate first encoding parameter that enables the first prediction error to meet a first condition. The reference value of the second colour component of the reference region of the template region is the reconstructed value of the second colour component of the reference region of the template region, or a value obtained by filtering the reconstructed value of the second colour component of the reference region of the template region.

In some embodiments, the first condition includes: the first prediction error being minimal, the first prediction error being less than a first threshold, the first prediction error being maximal, or the first prediction error being greater than a third threshold.

It is to be noted that the first prediction error depending on a different metric correspond to a different first condition. For example, under a metric of a sum of absolute differences (SAD), the first condition includes the first prediction error being minimal or the first prediction error being less than the first threshold. In another example, under a metric of a peak signal-to-noise ratio (PSNR), the first condition includes the first prediction error being maximal or the first prediction error being greater than the third threshold.

In embodiment 2, the operation 5122-3 (i.e., the operation that the first encoding parameter is determined based on the first prediction error) may further be implemented as follows. Parameter(s) for which the first prediction error(s) satisfy the first condition are selected from candidate first encoding parameter(s) for the template region. The first encoding parameter is determined based on the parameter(s), for which the first prediction error(s) satisfy the first condition, corresponding to the template region.

Further, the operation that the first encoding parameter is determined based on the parameter(s) for which the first prediction error(s) satisfy the first condition corresponding to the template region may be implemented by the following example 1, 2, 3 or 4.

In example 1, a sixth weighting coefficient is determined based on the reference sample value of the first colour component of the current block and the candidate first encoding parameter for which the first prediction error satisfies the first condition. A third predicted value of the second colour component of the current block is determined based on the sixth weighting coefficient and the reference sample value of the second colour component of the current block. A second prediction error of the corresponding candidate first encoding parameter for which the first prediction error satisfies the first condition is determined based on the third predicted value and an original value of the second colour component of the current block. The first encoding parameter is determined based on second prediction error(s) of the candidate first encoding parameter(s) for which the first prediction error(s) satisfy the first condition.

Here, the calculation principle of the sixth weighting coefficient is consistent with that of the second weighting coefficient, and the references may be made to equations (1) and (2). Therefore, the specific calculation manner of the sixth weighting coefficient will not be repeatedly described here. In some embodiments, the reference sample value of the first colour component of the current block includes a reconstructed value of the first colour component of the reference region of the current block (or a value obtained by filtering the reconstructed value) and a reconstructed value of the first colour component of the current block (or a value obtained by filtering the reconstructed value). The reference sample value of the second colour component of the current block includes a reconstructed value of the second colour component of the reference region of the current block, a value obtained by filtering the reconstructed value of the second colour component of the reference region of the current block, an original value of the second colour component of the reference region of the current block, or a value obtained by filtering the original value of the second colour component of the reference region of the current block.

In some embodiments, candidate first encoding parameter(s) for which the second prediction error(s) satisfy a third condition are selected from the candidate first encoding parameter(s) for which the first prediction error(s) satisfy the first condition. The first encoding parameter is determined based on the candidate first encoding parameter(s) for which the second prediction error(s) satisfy the third condition.

For example, the first encoding parameter is set to be equal to the candidate first encoding parameter for which the second prediction error satisfies the third condition. Here, the number of the candidate first encoding parameters for which the second prediction errors satisfy the third condition may be one or multiple. In case that there are multiple candidate first encoding parameters, the first encoding parameter is set to be equal to any candidate first encoding parameter for which the second prediction error satisfies the third condition.

In another example, the first encoding parameter is set to be equal to a fused value of the candidate first encoding parameters for which the second prediction errors satisfy the third condition. Further, in some embodiments, a weighting coefficient for the corresponding candidate first encoding parameter may be determined based on a value of the second prediction error. Based on this, the first encoding parameter is set to be equal to a weighted sum of the candidate first encoding parameters for which the second prediction errors satisfy the third condition and corresponding weighting coefficients.

In some embodiments, the third condition includes the second prediction error being minimal or maximal.

It is to be noted that different metrics for the second prediction error correspond to different third conditions. For example, under the metric of the SAD, the third condition includes the second prediction error being minimal. In another example, under the metric of the PSNR, the third condition includes the second prediction error being maximal.

In example 2, the operation that the first encoding parameter is determined based on the parameter(s) for which the first prediction error(s) satisfy the first condition corresponding to the template region may further be implemented as follows. The candidate first encoding parameter for which the first prediction error satisfies the first condition is extended to obtain a first extended parameter. A seventh weighting coefficient is determined based on the reference sample value of the first colour component of the current block, the candidate first encoding parameter for which the first prediction error satisfies the first condition, and the first extended parameter. A fourth predicted value of the second colour component of the current block is determined based on the seventh weighting coefficient and the reference sample value of the second colour component of the current block. A third prediction error of the corresponding parameter is determined based on the fourth predicted value and the original value of the second colour component of the current block. The first encoding parameter is determined based on third prediction error(s) of the candidate first encoding parameter(s) and first extended parameter(s).

Similarly, the calculation principle of the seventh weighting coefficient is consistent with that of the second weighting coefficient, and the reference may be made to the above equations (1) and (2), which will not be repeatedly described here. A seventh weighting coefficient corresponds to a candidate first encoding parameter or a first extended parameter, that is, the seventh weighting coefficient is determined based on a candidate first encoding parameter or a first extended parameter, and the reference sample value of the first colour component of the current block.

In some embodiments, centered on the candidate first encoding parameter for which the first prediction error satisfies the first condition, at least one first extended parameter may be obtained by extending to the left and/or the right based on a preset step.

In some embodiments, parameter(s) for which the third prediction error(s) satisfy a fourth condition may be selected from the candidate first encoding parameter(s) and the first extended parameter(s). The first encoding parameter may be determined based on the parameter(s) for which the third prediction error(s) satisfy the fourth condition.

For example, the first encoding parameter is set to be equal to the parameter for which the third prediction error satisfies the fourth condition. Here, the number of the parameters for which the third prediction errors satisfy the fourth condition may be one or multiple. In case that there are multiple parameters, the first encoding parameter is set to be equal to any parameter for which the third prediction error satisfies the fourth condition.

In another example, the first encoding parameter is set to be equal to a fused value of the parameters for which the third prediction errors satisfy the fourth condition. Further, in some embodiments, a weighting coefficient for the corresponding parameter may be determined based on a value of the third prediction error. Based on this, the first encoding parameter is set to be equal to a weighted sum of the parameters for which the third prediction errors satisfy the fourth condition and corresponding weighting coefficients.

In some embodiments, the fourth condition includes the third prediction error being minimal or maximal.

It is to be noted that different metrics for the third prediction error correspond to different fourth conditions. For example, under the metric of the SAD, the fourth condition includes the third prediction error being minimal. In another example, under the metric of the PSNR, the fourth condition includes the third prediction error being maximal.

In example 3, the operation that the first encoding parameter is determined based on the parameter(s) for which the first prediction error(s) satisfy the first condition corresponding to the template region may further be implemented as follows. The first encoding parameter is set to be equal to the parameter for which the first prediction error satisfies the first condition. Alternatively, the first encoding parameter is set to be equal to a fused value of the parameters for which the first prediction errors satisfy the first condition.

Further, in some embodiments, the first encoding parameter is set to be equal to a weighted sum of the parameters for which the first prediction errors satisfy the first condition and third weighting coefficients.

In some embodiments, the corresponding third weighting coefficient may be determined based on the first prediction error corresponding to the parameter for which the first prediction error satisfies the first condition. Alternatively, the third weighting coefficients may be set to preset constant values.

In example 4, the operation that the first encoding parameter is determined based on the parameter(s) for which the first prediction error(s) satisfy the first condition corresponding to the template region may further be implemented as follows. The parameter(s) for which the first prediction error(s) satisfy the first condition are extended to obtain first extended parameter(s). The first extended parameter(s) and/or the parameter(s) for which the first prediction error(s) satisfy the first condition are fused to obtain the first encoding parameter.

In some embodiments, the weighting coefficient for the corresponding parameter may be determined based on the value of the first prediction error. The weighting coefficient for the first extended parameter may be a preset constant value, or may be the weighting coefficient for the corresponding candidate first encoding parameter. Based on this, weighting calculation is performed on the first extended parameter(s) and/or the parameter(s) for which the first prediction error(s) satisfy the first condition to obtain the first encoding parameter.

In embodiment 3, the operation 5122-3 (i.e., the operation that the first encoding parameter is determined based on the first prediction error) may further be implemented as follows. The first encoding parameter is set to be equal to a weighted sum of the candidate first encoding parameters and fourth weighting coefficients.

In some embodiments, the fourth weighting coefficient for the corresponding candidate first encoding parameter is determined based on the first prediction error.

In embodiment 4, the operation 5122-3 (i.e., the operation that the first encoding parameter is determined based on the first prediction error) may further be implemented as follows. Based on respective first prediction errors corresponding to the same candidate first encoding parameter for the template region, an evaluation parameter representing a performance of the corresponding candidate first encoding parameter is determined. The first encoding parameter is determined based on evaluation parameter(s) of the candidate first encoding parameter(s).

Further, in some embodiments, the evaluation parameter is set to be equal to a fused value of the respective first prediction errors corresponding to the same candidate first encoding parameter for the template region. The fused value may be a sum or product of these first prediction errors, or the like.

Further, in some embodiments, the evaluation parameter is set to be equal to a sum of the respective first prediction errors corresponding to the same candidate first encoding parameter for the template region.

Further, in some embodiments, the operation that the first encoding parameter is determined based on the evaluation parameter(s) of the candidate first encoding parameter(s) may be implemented as follows. Parameter(s) for which theevaluation parameter(s) satisfy a second condition are selected from the candidate first encoding parameter(s). The first encoding parameter is determined based on the parameter(s) for which the evaluation parameter(s) satisfy the second condition.

Further, the operation that the first encoding parameter is determined based on the parameter(s) for which the evaluation parameter(s) satisfy the second condition may be implemented by the following example 5 or 6.

In example 5, an eighth weighting coefficient is determined based on the reference sample value of the first colour component of the current block and the parameter for which the evaluation parameter satisfies the second condition. A fifth predicted value of the second colour component of the current block is determined based on the eighth weighting coefficient and the reference sample value of the second colour component of the current block. A fourth prediction error of the parameter for which the evaluation parameter satisfies the second condition is determined based on the fifth predicted value and the original value of the second colour component of the current block. The first encoding parameter is determined based on fourth prediction error(s) of the candidate first encoding parameter(s).

Further, in some embodiments, the parameter for which the evaluation parameter satisfies the second condition is extended to obtain a second extended parameter. A ninth weighting coefficient is determined based on the reference sample value of the first colour component of the current block, the parameter for which the evaluation parameter satisfies the second condition, and the second extended parameter. A sixth predicted value of the second colour component of the current block is determined based on the ninth weighting coefficient and the reference sample value of the second colour component of the current block. A fifth prediction error of the corresponding parameter is determined based on the sixth predicted value and the original value of the second colour component of the current block. The first encoding parameter is determined based on fifth prediction error(s) of the candidate first encoding parameter(s) and second extended parameter(s).

Similarly, the calculation principle of the eighth weighting coefficient and the ninth weighting coefficient is consistent with that of the second weighting coefficient, and the reference may be made to the above equations (1) and (2), which will not be repeatedly described here. A ninth weighting coefficient corresponds to a candidate first encoding parameter or a second extended parameter, that is, the ninth weighting coefficient is determined based on a candidate first encoding parameter or a second extended parameter, and the reference sample value of the first colour component of the current block.

In example 6, the operation that the first encoding parameter is determined based on the parameter(s) for which the evaluation parameter(s) satisfy the second condition may be implemented as follows. The first encoding parameter is set to be equal to the parameter for which the evaluation parameter satisfies the second condition. Alternatively, the first encoding parameter is set to be equal to a fused value of the parameters for which the evaluation parameters satisfy the second condition. In some embodiments, the first encoding parameter is set to be equal to a weighted sum of the parameters for which the evaluation parameters satisfy the second condition and fifth weighting coefficients.

Further, the fifth weighting coefficients may be obtained by example 7 or 8.

In example 7, the fifth weighting coefficient for the parameter is determined based on a template region corresponding to the parameter for which the evaluation parameter satisfies the second condition.

Further, in some embodiments, the fifth weighting coefficient for the parameter is determined based on the number of samples and/or a template type of the template region corresponding to the parameter for which the evaluation parameter satisfies the second condition.

In some embodiments, the second condition includes the evaluation parameter being minimal, the evaluation parameter being less than a second threshold, the evaluation parameter being maximal, or the evaluation parameter being greater than a fourth threshold. It is to be understood that first prediction error depending on a different metric corresponds to a different second condition. For example, under the metric of the SAD, the second condition includes the evaluation parameter being minimal or the evaluation parameter error being less than the second threshold. In another example, under the metric of the PSNR, the second condition includes the evaluation parameter being maximal or the evaluation parameter being greater than the fourth threshold.

In example 8, the fifth weighting coefficients are preset constant values.

When intra prediction is performed on a certain current block, there may be a case where no template region exists. In some embodiments, when the template region does not exist, a default value is taken as a predicted value of the second colour component of the current block. In some other embodiments, when the template region does not exist, a predicted value of the second colour component of the current block may be determined by another prediction method different from the method. The another prediction method different from the method is, for example, a CCLM-based prediction method.

In some embodiments, after the first encoding parameter is obtained, the first encoding parameter or an index of the first encoding parameter may be encoded, and obtained encoded bits may be signalled in a bitstream.

In the operation 52, the reference sample value of the first colour component of the current block is determined.

In some embodiments, the reference sample value of the first colour component of the current block includes the reconstructed value of the first colour component of the current block and the reconstructed value of the first colour component of the reference region of the current block.

In the operation 53, the first weighting coefficient is determined based on the reference sample value of the first colour component of the current block and the first encoding parameter.

In some embodiments, a second difference of the current block may be determined. The second difference of the current block is set to be equal to an absolute value of a difference between a reference value of the first colour component of the current block and a reference value of the first colour component of the reference region of the current block. The first weighting coefficient is determined based on the second difference of the current block and the first encoding parameter. The reference value of the first colour component of the current block is the reconstructed value of the first colour component of the current block, or a value obtained by filtering the reconstructed value of the first colour component of the current block. The reference value of the first colour component of the reference region of the current block is the reconstructed value of the first colour component of the reference region of the current block, or a value obtained by filtering the reconstructed value of the first colour component of the reference region of the current block.

Further, in some embodiments, the first weighting coefficient may be determined using a preset correspondence based on the second difference of the current block and the first encoding parameter.

Further, in some embodiments, the preset correspondence is a softmax function, or the preset correspondence is obtained using a softmax function, An input of the softmax function is one of: a ratio of the second difference to the first encoding parameter, a product of the second difference and the candidate first decoding parameter, or a value obtained by bit-shifting the second difference. The number of bits of the bit-shifting is equal to the candidate first decoding parameter.

For example, the following equation (4) illustrates an example of the softmax function.

$$\mathrm{cWeight}[i][j][k] = \frac{e^{\frac{-\mathrm{diffY}[i][j][k]}{\mathrm{best_T}}}}{\sum_{n=0}^{\mathrm{inSize}-1} e^{\frac{-\mathrm{diffY}[i][j][n]}{\mathrm{best_T}}}} \quad (4).$$

Here,[i] represents the abscissa of the sample with the sample coordinates (i, j) in the current block, and [j] represents the ordinate of the sample with the sample coordinates (i, j) in the current block. cWeight[i] [j] [k] represents the first weighting coefficient of the k-th sample in the reference region of the current block corresponding to the sample with the sample coordinates (i, j) in the current block. inSize represents the number of samples in the reference region of the current block. best_T represents the first encoding parameter. The calculation equation of diffY[i] [j] [k] is illustrated in the following equation (5).

$$\mathrm{diffY}[i][j][k] = \mathrm{abs}(\mathrm{refY}[k] - \mathrm{recY}[i][j]) \qquad (5).$$

Here, refY[k] represents the reference value (such as a reconstructed value, a value obtained by filtering the reconstructed value, an original value, or a value obtained by filtering the original value) of the first colour component of the k-th sample in the reference region of the current block, and recY[i][j] represents the reference value (such as a reconstructed value, a value obtained by filtering the reconstructed value, an original value, or a value obtained by filtering the original value) of the first colour component of the sample with the sample coordinates (i, j) in the current block.

In the operation 54, the first predicted value of the second colour component of the current block is determined based on the first weighting coefficient and the reference sample value of the second colour component of the current block.

In some embodiments, the reference sample value of the second colour component of the current block includes the reconstructed value of the second colour component of the reference region of the current block, the value obtained by filtering the reconstructed value, the original value of the second colour component of the reference region of the current block, or the value obtained by filtering the original value.

Based on the equation (5), a first predicted value of the second colour component of the sample with the sample coordinates (i, j) in the current block is calculated as illustrated in the following equation (6).

$$C_{i,j}^{\mathrm{pred}} = \sum_{k=0}^{\mathrm{inSize}-1} \mathrm{cWeight}[i][j][k]\mathrm{refC}[k] \qquad (6).$$

That is, the first predicted value of the second colour component of the sample with the sample coordinates (i, j) in the current block is set to be equal to a weighted sum of the reference value of the second colour component of each sample in the reference region of the current block and the respective first weighting coefficient. The reference value of the second colour component of each sample in the reference region of the current block is a reconstructed value of the second colour component of the each sample in the reference region of the current block, a value obtained by filtering the reconstructed value, an original value of the second colour component of the each sample in the reference region of the current block, or a value obtained by filtering the original value.

In some embodiments, after the first predicted value of the second colour component of the current block is obtained by the operation 54, the method further includes the following operations 55 to 57.

In operation 55, an original value of the second colour component of the current block is obtained.

In operation 56, a residual value of the second colour component of the current block is determined based on the original value of the second colour component of the current block and the first predicted value of the second colour component.

In operation 57, the residual value of the second colour component of the current block is encoded, and obtained encoded bits are signalled in the bitstream.

In some other embodiments, after the first predicted value of the second colour component of the current block is obtained by the operation 54, the method further includes the following operations 515 to 518.

In operation 515, a refinement operation is performed on the first predicted value of the second colour component of the current block to obtain a refined first predicted value.

The first predicted value of the second colour component of the current block should be within a limited range. If exceeded, a corresponding refinement operation is performed.

For example, a clip operation may be performed on the first predicted value of the second colour component of the current block as follows.

When the value of $C^{pred}$ [i] [j] is less than 0, it is set to 0. $C^{pred}$ [i] [j] represents the first predicted value of the second colour component of the sample with the sample coordinates (i, j) in the current block.

When the value of $C^{pred}$ [i][j] is greater than (1<<BitDepth)-1, it is set to (1<<BitDepth)-1.

In this way, it is ensured that all predicted values in predWcp are between 0 and (1<<BitDepth)-1.

That is,

$$C^{pred}[i][j] = \mathrm{Clip3}(0, (1 \ll \mathrm{BitDepth}) - 1, C^{pred}[i][j]) \qquad (7).$$

Here,

$$\mathrm{Clip3}(x, y, z) = \begin{cases} x\,;\, z < x \\ y\,;\, z > y \\ z\,;\, \text{otherwise} \end{cases} \qquad (8).$$

Alternatively, the operations of the above equations (7) and (8) are combined into the following equation (9) to complete.

$$C^{pred}[i][j]=\mathrm{Clip3}(0,(1\ll \mathrm{BitDepth})\text{-}1),\left(\sum_{k=0}^{\mathrm{inSize}-1} \mathrm{subC}[i][j][k]+\mathrm{Offset}\right)\gg \mathrm{Shift}_1 \qquad (9).$$

In operation 516, the original value of the second colour component of the current block is obtained.

In operation 517, the residual value of the second colour component of the current block is determined based on the original value of the second colour component of the current block and the refined first predicted value.

In operation 518, the residual value of the second colour component of the current block is encoded, and obtained encoded bits are signalled in the bitstream.

Embodiments at the decoding end are provided as follows. The decoding method provided by the embodiments of the disclosure is similar to the above encoding method, and the above first encoding parameter is equivalent to the first decoding parameter described in the following embodiments, which are essentially the same. The candidate first encoding parameter is equivalent to the candidate first decoding parameter described in the following embodiments, which are also essentially the same and both are used to control the value of the weighting coefficient. The decoding method provided by the following embodiments has advantageous effects similar to those of the above embodiments of the encoding method. For technical details not disclosed in the embodiments of the decoding method of the disclosure, the references may be made to the description of the above embodiments of the encoding method for understanding. Therefore, technical details and specific embodiments not disclosed in the following disclosed embodiments of the decoding method will not be repeatedly described.

An embodiment of the disclosure provides a decoding method. FIG. 13 is a schematic flowchart of an implementation of the decoding method provided by the embodiment of the disclosure. As illustrated in FIG. 13, the method may include the following operations 131 to 134.

In operation 131, a first decoding parameter is determined based on a template region.

In operation 132, a reference sample value of a first colour component of a current block is determined.

In operation 133, a first weighting coefficient is determined based on the reference sample value of the first colour component of the current block and the first decoding parameter.

In operation 134, a first predicted value of a second colour component of the current block is determined based on the first weighting coefficient and a reference sample value of the second colour component of the current block.

Hereinafter, further alternative implementations of each of the above operations, related terms, or the like will be illustrated.

In the operation 131, the first decoding parameter is determined based on the template region.

In some embodiments, the template region may be first determined. For example, the template region may be determined based on sample availability of a neighborhing region of the current block. Based on a relative positional relationship with the current block, the neighbouring region includes at least one of: a top region of the current block, a left region of the current block, a top right region of the current block, a bottom left region of the current block, or a top left region of the current block.

In another example, the template region may also be determined based on a template type included in a configured prediction mode.

In some embodiments, the template type includes at least one of: an above template, a left template, an above right template, a below left template, or an above left template.

Further, in some embodiments, a template included in the configured prediction mode may be taken as the template region.

After the template region is determined, in some embodiments, the operation 131 may be implemented by the following operations 111 and 112.

In operation 111, a reference sample value of the template region is determined.

In some embodiments, the reference sample value includes a reconstructed value of a first colour component of the template region, a reconstructed value of a second colour component of the template region, a reconstructed value of a first colour component of a reference region of the template region, and a reconstructed value of a second colour component of the reference region of the template region.

Further, in some embodiments, the reference region of the template region includes at least one of: a top neighbouring region of the template region, a bottom neighbouring region of the template region, a left neighbouring region of the template region, a right neighbouring region of the template region, or the template region.

In the operation 112, the first decoding parameter is determined based on the reference sample value of the template region.

In some embodiments, the operation 112 may be implemented by operations 1121 and 1122.

In operation 1121, a first difference of the template region is determined. The first difference of the template region is set to be equal to an absolute value of a difference between a reference value of the first colour component of the template region and a reference value of the first colour component of the reference region of the template region.

Further, in some embodiments, the reference value of the first colour component of the template region is the reconstructed value of the first colour component of the template region, or a value obtained by filtering the reconstructed value of the first colour component of the template region. The reference value of the first colour component of the reference region of the template region is the reconstructed value of the first colour component of the reference region of the template region, or a value obtained by filtering the reconstructed value of the first colour component of the reference region of the template region.

In operation 1122, the first decoding parameter is determined based on the first difference of the template region.

Further, in some embodiments, the operation 1122 may be implemented by operations 1122-1 to 1122-3.

In operation 1122-1, second predicted value of the second colour component of the template region is determined based on the first difference and a candidate first decoding parameter.

In some embodiments, the candidate first decoding parameter includes one or more candidate first decoding parameters.

In operation 1122-2, a first prediction error of the second colour component of the template region is determined. The first prediction error is an error between a reference value of the second colour component of the template region and the second predicted value of the second colour component of the template region. The reference value of the second colour component of the template region is the reconstructed value of the second colour component of the template region, or a value obtained by filtering the reconstructed value of the second colour component of the template region.

In some embodiments, a second predicted value for determining the first prediction error is set to be equal to a second predicted value obtained by performing a refinement operation on the second predicted value of the second colour component of the template region.

In operation 1122-3, the first decoding parameter is determined based on the first prediction error.

In the embodiments of the disclosure, the embodiment for implementing the operation 1122-3 is not limited, and there may be various embodiments. For example, the operation 1122-3 may be implemented by any one of the following embodiments 5 to 8.

In embodiment 5, the operation 1122-3 may be implemented as follows. The second predicted value of the second colour component of the template region is set to be equal to a weighted sum of each reference value of the second colour component of the reference region of the template region and a respective second weighting coefficient. The first decoding parameter is set to be equal to a value of the corresponding candidate first decoding parameter that enables the first prediction error to meet a first condition. The reference value of the second colour component of the reference region of the template region is the reconstructed value of the second colour component of the reference region of the template region, or a value obtained by filtering the reconstructed value of the second colour component of the reference region of the template region.

Further, in some embodiments, the second weighting coefficient is determined using a preset correspondence based on the first difference of the template region and the candidate first decoding parameter.

Further, in some embodiments, the preset correspondence is a softmax function, or the preset correspondence may also be obtained using a softmax function. An input of the softmax function is one of: a ratio of the first difference to the candidate first decoding parameter, a product of the first difference and the candidate first decoding parameter, or a value obtained by bit-shifting the first difference. The number of bits of the bit-shifting is equal to the candidate first decoding parameter.

In some embodiments, the first condition includes: the first prediction error being minimal, the first prediction error being less than a first threshold, the first prediction error being maximal, or the first prediction error being greater than a third threshold.

In embodiment 6, the operation 1122-3 (i.e., the operation that the first decoding parameter is determined based on the first prediction error) may further be implemented as follows. Parameter(s) for which first prediction error(s) satisfies the first condition are selected from candidate first decoding parameter(s) for the template region. The first decoding parameter is determined based on the parameter(s) for which the first prediction error(s) satisfy the first condition corresponding to the template region.

Further, the operation that the first decoding parameter is determined based on the parameter(s) for which the first prediction error(s) satisfy the first condition corresponding to the template region may be implemented by the following example 9 or 10.

In example 9, the operation that the first decoding parameter is determined based on the parameter(s) for which the first prediction error(s) satisfy the first condition corresponding to the template region may further be implemented as follows. The first decoding parameter is set to be equal to the parameter for which the first prediction error satisfies the first condition. Alternatively, the first decoding parameter is set to be equal to a fused value of the parameters for which the first prediction errors satisfy the first condition.

Further, in some embodiments, the first decoding parameter is set to be equal to a weighted sum of the parameters for which the first prediction errors satisfy the first condition and third weighting coefficients.

In some embodiments, the corresponding third weighting coefficient may be determined based on the first prediction error corresponding to the parameter for which the first prediction error satisfies the first condition. Alternatively, the third weighting coefficients may be set to preset constant values.

In example 10, the operation that the first decoding parameter is determined based on the parameter(s) for which the first prediction error(s) satisfy the first condition corresponding to the template region may further be implemented as follows. The parameter(s) for which the first prediction error(s) satisfy the first condition are extended to obtain first extended parameter(s). The first extended parameter(s) and/or the parameter(s) for which the first prediction error(s) satisfy the first condition are fused to obtain the first decoding parameter.

In embodiment 7, the operation 1122-3 (i.e., the operation that the first decoding parameter is determined based on the first prediction error) may further be implemented as follows. The first decoding parameter is set to be equal to a weighted sum of the candidate first decoding parameters and fourth weighting coefficients.

In some embodiments, the fourth weighting coefficient for the corresponding candidate first decoding parameter is determined based on the first prediction error.

In embodiment 8, the operation 1122-3 (i.e., the operation that the first decoding parameter is determined based on the first prediction error) may further be implemented as follows. Based on respective first prediction errors corresponding to the same candidate first decoding parameter for the template region, an evaluation parameter representing a performance of the corresponding candidate first decoding parameter is determined. The first decoding parameter is determined based on evaluation parameter(s) for the candidate first decoding parameter(s).

Further, in some embodiments, the evaluation parameter is set to be equal to a fused value of the respective first prediction errors corresponding to the same candidate first decoding parameter for the template region.

Further, in some embodiments, the evaluation parameter is set to be equal to a sum of the respective first prediction errors corresponding to the same candidate first decoding parameter for the template region.

Further, in some embodiments, the operation that the first decoding parameter is determined based on the evaluation parameter(s) for the candidate first decoding parameter(s) may be implemented as follows. Parameter(s) for which the evaluation parameter(s) satisfy a second condition are selected from the candidate first decoding parameter(s). The first decoding parameter is determined based on the parameter(s) for which the evaluation parameter(s) satisfy the second condition.

Further, the operation that the first decoding parameter is determined based on the parameter(s) for which the evaluation parameter(s) satisfy the second condition may be implemented by the following example 11.

In example 11, the first decoding parameter is set to be equal to the parameter for which the evaluation parameter satisfies the second condition. Alternatively, the first decoding parameter is set to be equal to a fused value of the parameters for which the evaluation parameters satisfy the second condition.

In some embodiments, the first decoding parameter is set to be equal to a weighted sum of the parameters for which the evaluation parameters satisfy the second condition and fifth weighting coefficients.

Further, the fifth weighting coefficients may be obtained by example 12 or 13.

In example 12, the fifth weighting coefficient for the parameter is determined based on a template region corresponding to the parameter for which the evaluation parameter satisfies the second condition.

Further, in some embodiments, the fifth weighting coefficient for the parameter is determined based on the number of samples and/or a template type of the template region corresponding to the parameter for which the evaluation parameter satisfies the second condition.

In some embodiments, the second condition includes: the evaluation parameter being minimal, the evaluation parameter being less than a second threshold, the evaluation parameter being maximal, or the evaluation parameter being greater than a fourth threshold.

In example 13, the fifth weighting coefficients are preset constant values.

When intra prediction is performed on a certain current block, there may be a case where no template region exists. In some embodiments, when the template region does not exist, a default value is taken as a predicted value of the second colour component of the current block. In some other embodiments, when the template region does not exist, a predicted value of the second colour component of the current block may be determined by another prediction method different from the method.

In some embodiments, the method further includes the following operations. A bitstream is parsed to obtain an index of the first decoding parameter. The first decoding parameter is obtained based on the index of the first decoding parameter.

In some embodiments, the method further includes the following operation. The bitstream is parsed to obtain the first decoding parameter.

In some embodiments, the method further includes the following operations. The bitstream is parsed to obtain a residual value of the second colour component of the current block. A reconstructed value of the second colour component of the current block is determined based on the residual value of the second colour component and the first predicted value of the second colour component of the current block.

In some embodiments, the method further includes the following operation. A refinement operation is performed on the first predicted value of the second colour component of the current block to obtain a refined first predicted value. The reconstructed value of the second colour component of the current block is determined based on the residual value of the second colour component and the refined first predicted value.

In the embodiments of the disclosure, the types of the first colour component and the second colour component are different. For example, the first colour component is a luma component, and the second colour component is a chroma component. In another example, the first colour component is a chroma component, and the second colour component is a luma component.

When chroma prediction is performed on the current block, reconstructed luma information of the current block, reconstructed luma information of a neighbouring reference region and reconstructed chroma information of the neighbouring reference region are all encoded reconstructed information. Therefore, a WCP technology may be adopted using the above reconstructed information, and a template matching operation may be added before the WCP process, so as to select the best model parameter based on current blocks of different sizes and different contents. The key lies in searching for the best model parameter of the weight model used to calculate the weight vector in the neighbouring region by means of template matching. For the decoding end, the best model parameter is an example of the first decoding parameter described in the above embodiments. For the encoding end, the best model parameter is an example of the first encoding parameter described in the above embodiments.

In some embodiments, the detailed operations of the chroma prediction process for the WCP technology are as follows.

Inputs to the WCP are the position (xTbCmp, yTbCmp) of the current block, the width nTbW of the current block, and the height nTbH of the current block.

Output from the WCP is the predicted chroma value predSamples[x][y] of the current block. Taking the position of the sample at the top-left corner of the current block as the coordinate origin, x = 0, ... , nTbW-1; y = 0, ... , nTbH-1. It is to be noted that the chroma component is an example of the second colour component described in the above embodiments, and the luma component described hereinafter is an example of the first colour component described in the above embodiments.

As illustrated in FIG. 14, the prediction process for the WCP technology includes the following operations 141 to 145, i.e., core parameter configuration, input information acquisition, weighted chroma prediction, and post-processing. A template matching operation is added between the two operations of input information acquisition and weighted chroma prediction. The predicted chroma value of the current block may be obtained by the above operations.

In operation 141, WCP core parameters are determined. These parameters may be preconfigured.

In operation 142, input information, including reference chroma information, reference luma information, and reconstructed luma information of the current block, is obtained based on the determined core parameters.

In operation 143, a control parameter is determined by means of template matching. The control parameter is equivalent to an example of the first decoding parameter described in the above embodiments for the decoding end, and is equivalent to an example of the first encoding parameter described in the above embodiments for the encoding end.

In operation 144, weighted chroma prediction calculation is performed based on the obtained input information.

In operation 145, a post-processing process is performed on the chroma prediction calculation result.

Each operation illustrated in FIG. 14 is introduced in detail as follows.

In the operation 141, the WCP core parameters are determined.

Here, core parameters involved in WCP are determined, i.e., the WCP core parameters may be obtained or inferred through configuration or in some manner. For example, the WCP core parameters are obtained from the bitstream at the decoding end. The specific application will be introduced in detail later.

Determination of the WCP core parameters includes, but is not limited to the control parameter (T), the number inSize of various types of input information for the weighted chroma prediction, and the number of outputs (predWcp) from the weighted chroma prediction. predWcp is arranged as predSizeW $\times$ predSizeH. The number of outputs (predWcp) from the weighted chroma prediction may be set to the same value (e.g., predSizeW = predSizeH = S/4) or to be related to the size of the current block (e.g., predSizeW = nTbW, predSizeH = nTbH). The control parameter (T) may be used to adjust a non-linear function in a subsequent link or to adjust data involved in the subsequent link.

The determination of the WCP core parameters is affected by the size of the block, the content of the block, or the number of samples within the block under certain conditions. Classification may be performed based on the size of the current block, the content of the current block, or the number of samples within the current block, and the same or different core parameters may be configured based on different categories. In other words, inSize or predWcp (arranged as predSizeW $\times$ predSizeH) corresponding to different categories may be the same, for example, predSizeW = predSizeH = s/4, and predWcp may be related to the size of the current block, for example, predSizeW = nTbW and predSizeH = nTbH. It is to be noted that predSizeW and predSizeH may be the same or different. Control parameters (T) corresponding to current blocks with different sizes, with different contents or with different numbers of samples within the blocks are determined by template matching in the operation 143.

In the operation 142, the input information is obtained.

When the current block is predicted, a region on the top of the current block, a region to the top left of the current block and a region to the left of the current block are all referred to as the reference region of the current block. As illustrated in FIG. 15, samples in the reference region of the current block are all reconstructed samples and are referred to as reference samples.

The reference chroma information refC and reference luma information refY are obtained from the reference region. The obtaining the reference chroma information refC includes, but is not limited to selecting a reference reconstructed chroma value of the top region of the current block and a reference reconstructed chroma value of the left region of the current block. The obtaining the reference luma information refY includes, but is not limited to obtaining corresponding reference luma information based on the position of the reference chroma information.

The reconstructed luma information recY of the current block is obtained, and the obtaining manner includes, but is not limited to the following operation. Corresponding reconstructed luma information is obtained as the reconstructed luma information of the current block based on the position of the chroma information of the current block.

It is to be noted that the reference chroma information refC is an example of the reference sample value of the second colour component of the current block, and the reference luma information refY and the reconstructed luma information recY of the current block are an example of the reference sample value of the first colour component of the current block.

The operation that the input information is obtained includes the following operations. The reference chroma information refC of the inSize quantity is obtained (after a pre-processing operation if pre-processing is required). The reference luma information refY of the inSize quantity is obtained (after a pre-processing operation if pre-processing is required). The reconstructed luma information recY of the current block is obtained (after a pre-processing operation if pre-processing is required).

In the operation 143, the control parameter is determined by means of template matching.

The prediction process for WCP is simulated by the reconstructed luma samples and reconstructed chroma samples in the template region, and the reconstructed luma samples and reconstructed chroma samples in the reference region of the template region, from which the best control parameter (best_T) is selected. As illustrated in FIG. 16, the following operations 1431 to 1433 are specifically included.

In operation 1431, the template region and the reference region of the template are determined.

Based on sample availability of neighbouring regions of the current block, it is determined whether the samples in the template region and the reference region of the template region are available, including reconstructed luma information and reconstructed chroma information. Based on the relative positional relationship between the template region and the current block, the template region may be classified into template types such as an above template, a left template, an above right template, a below left template, and an above left template. The reference region of the template region varies with different template types, and the template region is allowed to overlap with the reference region of the template region. In addition, in order to satisfy requirements of different current blocks, the template type and the reference region corresponding to the template region may be flexibly combined, as illustrated in FIGS. 10, 11, and 12A. Sizes of different types of templates for different current blocks may be fixed the same or different. For example, different template sizes may be selected based on different sizes of current blocks. Taking the template in FIG. 11 as an example for illustration, a size setting condition of the template is illustrated by the following equation. nTbW and nTbH are the width and height of the current block, and iTempW and iTempH are the width and height of the determined template.

$$\text{above template:}\begin{cases}\begin{cases}\text{iTempW} = \text{nTbW}\\ \text{iTempH} = 2\end{cases}, & \min(\text{nTbW}, \text{nTbH}) \le 4\\ \begin{cases}\text{iTempW} = \text{nTbW}\\ \text{iTempH} = 4\end{cases}, & \min(\text{nTbW}, \text{nTbH}) > 4\end{cases}$$

$$\text{left template:}\begin{cases}\begin{cases}\text{iTempW} = 2\\ \text{iTempH} = \text{nTbH}\end{cases}, & \min(\text{nTbW}, \text{nTbH}) \le 4\\ \begin{cases}\text{iTempW} = 4\\ \text{iTempH} = \text{nTbH}\end{cases}, & \min(\text{nTbW}, \text{nTbH}) > 4\end{cases}$$

$$\text{Min}(x, y) = \begin{cases}x, & x \le y\\ y, & x > y\end{cases}$$

Different template sizes may also be selected based on the number of samples within the current block. Taking the template in FIG. 11 as an example for illustration, a size setting condition of the template is illustrated by the following equation. nTbW and nTbH are the width and height of the current block, nTbW × nTbH is the number of samples in the current block, and iTempW and iTempH are the width and height of the adopted template.

$$\text{above template:}\begin{cases}\begin{cases}\text{iTempW} = \text{nTbW}\\ \text{iTempH} = 2\end{cases}, & \text{nTbW} \times \text{nTbH} \le 16\\ \begin{cases}\text{iTempW} = \text{nTbW}\\ \text{iTempH} = 4\end{cases}, & \text{nTbW} \times \text{nTbH} > 16\end{cases}$$

$$\text{left template:}\begin{cases}\begin{cases}\text{iTempW} = 2\\ \text{iTempH} = \text{nTbH}\end{cases}, & \text{nTbW} \times \text{nTbH} \leq 16\\ \begin{cases}\text{iTempW} = 4\\ \text{iTempH} = \text{nTbH}\end{cases}, & \text{nTbW} \times \text{nTbH} > 16\end{cases}$$

The combination type of the template type and the reference region corresponding to the template region, or the template size may also be signalled in the bitstream at the encoding end.

FIGS. 10, 11, and 12A respectively illustrate schematic diagrams of positions of three types of templates and positions of corresponding reference regions. Templates involved in the following embodiments are illustrated taking the above template and left template in FIG. 11 as an example, and during an actual application process, more different template types and corresponding reference regions may be used in this operation.

In operation 1432, WCP prediction is performed in the template region.

Under different template types, the reconstructed luma information of the template region, the reconstructed chroma information of the template region, and the reconstructed luma information and reconstructed chroma information of the reference region of the template region are all encoded reconstructed information. Therefore, a basic process of the WCP may be performed in the template region. The reconstructed luma information of the template region and the reconstructed luma information of the reference region of the template region are examples of the reference sample value of the first colour component of the template region. The reconstructed chroma information of the template region and the reconstructed chroma information of the reference region of the template region are examples of the reference sample value of the second colour component of the template region.

WCP prediction for the above template is first performed. The detailed process is as follows.

Inputs to the WCP for the template are the position (xTemp, yTemp) of the above template, the width nTbW of the above template, and the height iTempH of the above template.

Output from the WCP for the template is the predicted chroma value predTempSamples[x][y] of the above template, i.e. an example of the second predicted value of the second colour component of the template region. Taking the position of the chroma sample at the top left corner of the above template as the coordinate origin, x = 0, ... , nTbW-1; y = 0, ... , iTempH-1.

WCP core parameters are determined, which include, but are not limited to, the control parameter (T), the number inTempSize of various types of input information for the weighted chroma prediction, and the number of outputs (predTempWcp) from the weighted chroma prediction (arranged as predTempSizeW × predTempSizeH). The abovementioned parameters inTempSize, predTempSizeW and predTempSizeH may vary according to different template types, or may vary according to WCP core parameters configured during the WCP prediction process for the current block.

Input information is obtained. Reference chroma information refTempC and reference luma information refTempY are obtained from the reference region of the above template. The obtaining the reference chroma information refTempC includes, but is not limited to selecting a reference reconstructed chroma value of the reference region of the above template. The obtaining the reference luma information refTempY includes, but is not limited to obtaining corresponding reference luma information based on the position of the reference chroma information.

The reconstructed chroma information recTempC of the template is obtained, and the obtaining manner includes, but is not limited to the following operation. Reconstructed chroma information in the current template is selected.

The reconstructed luma information recTempY of the template is obtained, and the obtaining manner includes, but is not limited to the following operation. Corresponding reconstructed luma information is obtained as the reconstructed luma information of the current template based on the position of the reconstructed chroma information in the current template. A pre-processing operation may also be performed during such process according to different requirements, for example, performing up-sampling/down-sampling based on different input colour format information, selecting only part of the reference region, or performing point selection in the reference region.

Then, the predicted chroma values, $C^{predT}$ [i] [j], i = 0, ..., predTempSizeW-1, j = 0, ... predTempSizeH-1, of the template within the size specified by the configuration parameters are obtained one by one. It is to be noted that predTempSizeH and predTempSizeW are the determined WCP core parameters, and may be the same as or different from the height or width of the current template.

The detailed calculation process is as follows.

For i = 0, ..., predTempSizeW-1; j = 0, ..., predTempSizeH-1,
for k = 0, 1, ..., inTempSize-1,

each element diffTempY[i][j][k] in a luma difference vector is constructed,
each element cTempWeight[i][j][k] (or cTempWeightFloat[i][j][k]) in a weight vector is calculated, and

the predicted chroma value $C^{predT}$ [i][j] is calculated from cTempWeight[i][j] (or cTempWeightFloat[i][j][k]) and refTempC.

The luma difference vector is constructed. For each to-be-predicted chroma sample $C^{predT}$ [i] [j] of the template within the size specified by the WCP core parameters, the corresponding reconstructed luma information recTempY[i][j] is subtracted from the reference luma information refTempY of the inTempSize quantity, and the absolute values of these differences are taken to obtain the luma difference vector diffTempY[i] [j] [k]. The calculation equation is illustrated in equation (10), where k = 0, 1, ..., inTempSize-1. Similarly, linear or non-linear numerical processing may be performed on the obtained luma difference vector. An element in the luma difference vector is an example of the first difference.

$$\mathrm{diffTempY}[i][j][k] = \mathrm{abs}(\mathrm{refTempY}[k] - \mathrm{recTempY}[i][j]) \qquad (10).$$

Herein,

$$\mathrm{abs}\ (x) = \begin{cases} x & ; \quad x >= 0 \\ -x & ; \quad x < 0 \end{cases}.$$

The weight vector is calculated. A non-linear weight model is adopted to process the luma difference vector diffTempY[i] [j] [k] corresponding to each to-be-predicted sample $C^{predT}$ [i] [j], to obtain a floating-point weight vector cTempWeightFloat[i][j] corresponding to the corresponding weight vector. The control parameter (T), which is transmitted in the core parameters, is configured as an adjustment parameter for the model. It is to be noted that the weight model here is necessarily consistent with the weight model adopted by the current block in operation 1442. Taking a non-linear softmax function as an example, the calculation equation of the weight vector corresponding to each to-be-predicted sample is illustrated in equation (11). An element in the weight vector is an example of the second weighting coefficient.

$$\mathrm{cTempWeightFloat}[i][j][k] = \frac{e^{\frac{-\mathrm{diffTempY}[i][j][k]}{T}}}{\sum_{n=0}^{\mathrm{inTempSize}-1} e^{\frac{-\mathrm{diffTempY}[i][j][n]}{T}}} \qquad (11).$$

After the above calculation is completed, a fixed-point operation may be performed by the following equation (12).

$$\mathrm{cTempWeight}[i][j][k] = \mathrm{round}\left(\mathrm{cTempWeightFloat}[i][j][k] \times 2^{\mathrm{Shift}}\right) \qquad (12).$$

Herein, round (x) = Sign (x) × Floor (Abs (x) + 0.5);

$$\mathrm{Sign}\ (x) = \begin{cases} 1 & ; \quad x > 0 \\ 0 & ; \quad x == 0; \\ -1 & ; \quad x < 0 \end{cases}$$

Floor (x) represents the largest integer less than or equal to x; and

$$\mathrm{Abs}\ (x) = \begin{cases} x & ; \quad x >= 0 \\ -x & ; \quad x < 0 \end{cases}.$$

The predicted chroma value is calculated. Based on the weight vector cTempWeight[i][j] (or cTempWeightFloat[i][j]) and the reference chroma information refTempC corresponding to each to-be-predicted sample $C^{predT}$ [i] [j] in the template, the predicted chroma value of the to-be-predicted sample $C^{predT}$ [i] [j] is calculated. Specifically, the reference chroma information refTempC of each to-be-predicted sample $C^{predT}$[i][j] and the elements of the corresponding weight vector are multiplied element-wise to obtain subTempC[i][j] (or subTempCFloat[i][j]), and the multiplication results are accumulated to obtain the predicted chroma value $C^{predT}$ [i][j] of the each to-be-predicted sample. The calculation equation is as the following equation (13).

For

$$k = 0, 1, ..., inTempSize\text{-}1$$

$$subTempCFloat[i][j][k] = (cTempWeightFloat[i][j][k] \times refTempC[k]) \quad (13).$$

After the calculation is completed, the fixed-point operation may be performed on subTempCFloat. The subTempCFloat may be multiplied with a coefficient to retain a certain calculation accuracy during the fixed-point process, as illustrated in the following equations (14) and (15).

$$subTempC[i][j][k]=round\left(subTempCFloat[i][j][k]\times 2^{Shift}\right) \quad (14).$$

Or,

$$subTempC[i][j][k] = (cTempWeight[i][j][k] \times refTempC[k]) \quad (15).$$

For

$$i = 0, ..., predTempSizeW\text{-}1,\ j = 0, ..., predTempSizeH\text{-}1$$

$$C^{predT}Float[i][j] = \sum_{k=0}^{inTempSize-1} subTempCFloat[i][j][k] \quad (16).$$

After the calculation is completed, the fixed-point operation is performed on $C^{predT}$Float[i][j], as illustrated in equation (17).

$$C^{predT}[i][j] = round\left(C^{predT}Float[i][j]\right) \quad (17).$$

Alternatively, the subTempC[i][j][k] obtained by the fixed-point operation is used for calculation, as in equation (18).

$$C^{predT}[i][j] = \left(\sum_{k=0}^{inTempSize-1} subTempC[i][j][k] + Offset\right) \gg Shift_1 \quad (18).$$

Alternatively, the subTempC[i][j][k] obtained by the fixed-point operation is used for calculation, as in equation (19).

$$C^{predT}[i][j] = \left(\sum_{k=0}^{inTempSize-1} subTempC[i][j][k] + Offset\right) \gg Shift_1 \quad (19).$$

Here, Offset = 1 « ($Shift_1$ - 1). $Shift_1$ is the amount of bit-shifting required when cTempWeight[i][j][k] or subTempC [i][j][k] is calculated ($Shift_1$= Shift), or in the fixed-point operation for accuracy improvement in other links.
Separate spatial storage is performed on the predicted chroma value $C^{predT}$[i][j] of each to-be-predicted sample, i.e., the weighted chroma prediction output predTempWcp.
predTempWcp is refined. The predicted chroma values in predTempWcp should be within the limited range, and if exceeded, a corresponding refinement operation should be performed. Such refinement operation is necessarily consistent with the refinement operation adopted by the current block in operation 1444 mentioned below.
For example, a clip operation may be performed on the predicted chroma value in $C^{predT}$ [i] [j] as follows.
When the value of $C^{predT}$ [i] [j] is less than 0, it is set to 0.
When the value of $C^{predT}$[i][j] is greater than (1<<BitDepth)-1, it is set to (1<<BitDepth)-1.
In this way, it is ensured that all predicted values in predTempWcp are between 0 and (1<<BitDepth)-1.
That is,

$$C^{predT}[i][j] = clip3\left(\sum_{k=0}^{inTempSize-1} cTempWeightFloat[i][j][k]refTempC[k], 0, (1 << BitDepth) - 1\right)$$

At this point, the WCP prediction process for the above template is completed, and then the WCP prediction process for the left template is performed. The sequence of the WCP prediction processes for the two templates may be interchanged.

FIG. 12B depicts a WCP process, which may be a WCP process performed on the basis of the template region and the reference region of the template region illustrated in FIG. 12A, or may also be a WCP process performed on the basis of another type of template region and corresponding reference region. As illustrated in FIG. 12B, for each sample recTempY[i][j] in the down-sampled luma block, firstly, the luma difference vector diffTempY[i][j][k] is obtained based on the absolute values of the differences between recTempY[i][j] and each element of the neighbouring luma vector refTempY[k]. Secondly, a normalized weight vector cTempWeight[i] [j] [k] is derived based on a non-linear mapping model related to diffTempY[i][j] [k]. Thirdly, the weight vector is used, to obtain a predicted chroma sample $C^{predT}$ [i] [j] by performing vector multiplication on the weight vector and the neighbouring chroma vector.

The WCP prediction process for the left template only provides special illustration on the input, output, core parameter configuration and input information acquisition for the WCP in the WCP prediction process for the above template, and other operations are consistent.

Inputs to the WCP for the template are the position (xTemp, yTemp) of the left template, the width iTempW of the left template, and the height nTbH of the left template.

Output from the WCP for the template is the predicted chroma value predTempSamples[x][y] of the left template. Taking the position of the chroma sample at the top left corner of the left template as the coordinate origin, x = 0, ..., iTempW-1; y = 0, ..., nTbH-1.

Core parameters are configured, which include, but are not limited to, the control parameter (T), the number inTempSize of various types of input information for the weighted chroma prediction, and the number of outputs (predTempWcp) from the weighted chroma prediction (arranged as predTempSizeW × predTempSizeW). The abovementioned parameters inTempSize, predTempSizeW, and predTempSizeW may be the same as the configuration parameters of the above template, or different parameters may be selected based on the template types.

Input information is obtained. The reference regions of the above template and the left template may be the same, or different reference regions may be selected respectively. Similarly, a pre-processing operation may be performed according to different requirements.

After the WCP prediction process is completed for the left template, the weighted chroma prediction output is also stored.

In operation 1433, the best control parameter best_T is selected.

The WCP prediction processes for the above template and the left template are introduced above. In this way, the reconstructed chroma information recTempC[i][j] and the predicted chroma information predTempWcp [i][j] corresponding to a certain control parameter (T) in the respective template are obtained.

By loop traversing the WCP prediction processes for the template under different control parameters (T), corresponding multiple groups of predicted chroma information may be obtained, and a best control parameter (T) may be selected according to an evaluation criterion. For example, an evaluation criterion such as an SAD, a sum of absolute transformed difference (SATD), a sum of squared error (SSE), a mean absolute difference (MAD), a mean absolute error (MAE), a mean squared error (MSE), a rate distortion function (RDO), or the like may be selected, i.e., an example of the first prediction error. An evaluation criterion mentioned in the following content may be one selected from the above criteria. Taking the evaluation criteria of the MAE as an example, the calculation equation is as the following equation (20).

$$MAE = \frac{\sum_{i=0}^{predTempSizeW-1} \sum_{j=0}^{predTempSizeH-1} |predTempWcp[i][j] - recTempC[i][j]|}{predTempSizeW \times predTempSizeH} \quad (20).$$

If no template can be obtained, all predicted values are filled with default values, which may be set to (1<<BitDepth)-1 (BitDepth is a bit depth required by the chroma sample value). Alternatively, the WCP prediction algorithm is directly halfway exited (i.e., the current block does not use the WCP prediction algorithm).

If only one template can be obtained, either the above template or the left template can be obtained. In such case, only one best control parameter may be selected, and this control parameter is saved and recorded as best_T.

If both templates can be obtained, the best parameter above_T of the above template and the best parameter left_T of the left template may be selected. Then it is necessary to process both the parameters, which includes, but is not limited to, the following methods.

In a first method, above_T and left_T are weighted fused into a best parameter best_T, as illustrated in equation (21).

$$best_T = w_0 \times above_T + w_1 \times left_T \qquad (21).$$

As a standard of the weighted fusion, fixed weighting coefficients may be selected, or weighting coefficients may be allocated based on the mean absolute error of reconstructed chroma and predicted chroma of a respective template. The former uses the fixed weighting coefficients of {0.5, 0.5}, and while the latter calculates the weighting coefficients using equation (22), where $MAE_A$ is the mean absolute error of the above template, and $MAE_L$ is the mean absolute error of the left template. Both $MAE_L$ and $MAE_A$ are examples of the first prediction error.

$$\begin{cases} w_0 = \frac{MAE_L}{MAE_A + MAE_L} \\ w_1 = \frac{MAE_A}{MAE_A + MAE_L} \end{cases} \qquad (22).$$

In a second method, above_T and left_T are retained, and the weighted chroma prediction in the operation 144 is continued. The original chroma value and predicted chroma value of the current block are processed according to an evaluation criterion at the encoding end, and then the best control parameter is selected from the two. The index of the above template or the left template may be signalled in the encoded bitstream, or the parameter value may be directly signalled in the encoded bitstream.

In a third method, similarly, above_T and left_T are retained. During the weighted chroma prediction in the operation 144, neighbouring parameter values of values of above_T and left_T are traversed, and the original chroma value and predicted chroma value of the current block are processed according to an evaluation criterion at the encoding end. The best control parameter is selected from the narrowed parameter interval. The index of the best control parameter in the narrowed interval may be signalled in the encoded bitstream, or the parameter value may be directly signalled in the encoded bitstream. A case of multiple best control parameters, such as the second method and the third method, is not specially illustrated in the operation 144.

If more than two templates are selected for subsequent operations during the template selection process, processing may be performed according to the above cases.

In the operation 144, the weighted chroma prediction calculation is performed based on the obtained input information.

Predicted chroma values $C^{pred}$ [i] [j], i = 0, predSizeW-1; j = 0, ..., predSizeH -1, within the size specified by the configuration parameters are obtained one by one. It is to be noted that predSizeH and predSizeW are the determined WCP core parameters, and may be the same as or different from the height nTbH or width nTbW of the current block. In this way, under certain conditions, the following calculation may be performed on only part of to-be-predicted samples in the current block.

As illustrated in FIG. 17, the operation 144 includes the following operations 1441 to 1444.

In operation 1441, for each to-be-predicted sample, the luma difference vector is constructed using the obtained reference chroma information, reference luma information, and reconstructed luma information of the current block.

In operation 1442, for each to-be-predicted sample, the weight vector is calculated using a non-linear function based on the luma difference vector.

In operation 1443, for each to-be-predicted sample, the predicted chroma value is calculated by weighting based on the weight vector and the obtained reference chroma information.

In operation 1444, for each to-be-predicted sample, the predicted chroma value obtained by calculation is refined, including the clip operation.

That is, the weighted chroma prediction value is obtained by obtaining the weights and performing weighted prediction based on the weights, and then the weighted chroma prediction value is refined. The obtaining process of the weights includes the following operations. The luma difference vector is constructed, and the weight vector is calculated.

The detailed calculation process is as follows.

For i = 0, ..., predSizeW-1; j = 0, ..., predSizeH-1,
for k = 0, 1, ..., inSize-1,

each element diffY[i][j][k] in the luma difference vector is constructed,
each element cWeight[i] [j] [k] (or cWeightFloat[i][j][k]) in the weight vector is calculated, and

the predicted chroma value Cpred[i][j] is calculated from cWeight[i][j] (or ceightFloat[i][j][k]) and refC.

In the operation 1441, for each to-be-predicted sample, the luma difference vector is constructed using the obtained reference chroma information, reference luma information, and reconstructed luma information of the current block.

For each to-be-predicted sample $C^{pred}$ [i] [j] within the size specified by the WCP core parameters, the corresponding reconstructed luma information recY[i][j] is subtracted from the reference luma information refY of the inSize quantity, and the absolute values of these differences are taken to obtain the luma difference vector diffY[i][j][k]. The calculation equation is illustrated in equation (23), where k = 0, 1, ..., inSize-1.

$$\text{diffY}[i][j][k] = \text{abs}(\text{refY}[k] - \text{recY}[i][j]) \qquad (23).$$

Herein,

$$\text{abs}(x) = \begin{cases} x & ; \quad x >= 0 \\ -x & ; \quad x < 0 \end{cases}.$$

Under certain conditions, linear or non-linear numerical processing may be performed on the luma difference vector of the to-be-predicted sample.

For example, the values of the luma difference vector for the to-be-predicted sample may be scaled based on the WCP control parameter T in the WCP core parameters.

In the operation 1442, for each to-be-predicted sample, the weight vector is calculated using the non-linear function based on the luma difference vector.

Based on the best control parameter (best_T) obtained in the operation 143, a non-linear weight model is adopted to process the luma difference vector diffY[i][j] corresponding to each to-be-predicted sample $C^{pred}$ [i][j], to obtain the corresponding weight vector cWeightFloat[i][j]. The weight model includes, but is not limited to, a non-linear normalization function, a non-linear exponential normalization function, or the like.

For example, a non-linear Softmax function may be adopted as the weight model, the luma difference vector diffY [i][j] corresponding to each to-be-predicted sample $C^{pred}$ [i] [j] may be adopted as the input of the weight model, and the best control parameter (best_T) may be adopted as the adjustment parameter of the model. The model outputs the weight vector cWeightFloat[i][j] corresponding to each to-be-predicted sample, and the calculation equation is illustrated in equation (24), where k = 0, 1, ..., inSize-1.

$$\text{cWeightFloat}[i][j][k] = \frac{e^{\frac{-\text{diffY}[i][j][k]}{\text{best_T}}}}{\sum_{n=0}^{\text{inSize}-1} e^{\frac{-\text{diffY}[i][j][k]}{\text{best_T}}}} \qquad (24).$$

After the above calculation is completed, the fixed-point operation may be performed on cWeightFloat, as illustrated in the following equation (25).

$$\text{cWeight}[i][j][k] = \text{round}\left(\text{cWeightFloat}[i][j][k] \times 2^{\text{Shift}}\right) \qquad (25).$$

Herein, Round (x) = Sign (x)×Floor (Abs (x) + 0.5);

$$\text{Sign}(x) = \begin{cases} 1 & ; \quad x > 0 \\ 0 & ; \quad x == 0; \\ -1 & ; \quad x < 0 \end{cases}$$

Floor (x) represents the largest integer less than or equal to x; and

$$\text{Abs}(x) = \begin{cases} x & ; \quad x >= 0 \\ -x & ; \quad x < 0 \end{cases}.$$

In the operation 1443, for each to-be-predicted sample, the predicted chroma value is calculated by weighting based on the weight vector and the obtained reference chroma information.

Based on the weight vector cWeight[i][j] (or cWeightFloat[i][j]) and the reference chroma information refC corresponding to each to-be-predicted sample, the predicted chroma value of the to-be-predicted sample is calculated.

Specifically, the reference chroma information refC of each to-be-predicted sample $C^{pred}[i][j]$ and the elements of the weight vector corresponding to the each to-be-predicted sample are multiplied element-wise to obtain subC[i][j] (or subCFloat[i][j]), and the multiplication results are accumulated to obtain the predicted chroma value $C^{pred}[i][j]$ of the each to-be-predicted sample (i.e. the weighted prediction). The calculation equation is illustrated in the following equation (26).

Fork = 0, 1, ..., inSize-1,

$$\mathrm{subCFloat}[i][j][k] = (\mathrm{cWeightFloat}[i][j][k] \times \mathrm{refC}[k]) \qquad (26).$$

After the calculation is completed, the fixed-point operation may be performed on subCFloat. The subCFloat may be multiplied with a coefficient to retain a certain calculation accuracy during the fixed-point process, as illustrated in the following equation (27).

$$\mathrm{subC}[i][j][k] = \mathrm{round}(\mathrm{subCFloat}[i][j][k] \times 2^{\mathrm{Shift}}) \qquad (27).$$

Alternatively, as illustrated in the following equation (28).

$$\mathrm{subC}[i][j][k] = (\mathrm{cWeight}[i][j][k] \times \mathrm{refC}[k]) \qquad (28).$$

For i = 0, ..., predSizeW-1, j = 0, ..., predSizeH-1,

$$C^{pred}\mathrm{Float}[i][j] = \sum_{k=0}^{\mathrm{inSize}-1} \mathrm{subCFloat}[i][j][k] \qquad (29).$$

After the calculation is completed, the fixed-point operation is performed on $C^{pred}Float[i][j]$, as illustrated in the following equation (30).

$$C^{pred}[i][j] = \mathrm{round}\left(C^{pred}\mathrm{Float}[i][j]\right) \qquad (30).$$

Alternatively, the subC[i][j][k] obtained by the fixed-point operation is used for calculation as in the following equation (31).

$$C^{pred}[i][j] = \left(\sum_{k=0}^{\mathrm{inSize}-1} \mathrm{subC}[i][j][k] + \mathrm{Offset}\right) \gg \mathrm{Shift}_1 \qquad (31).$$

Here, Offset = 1 << ($Shift_1$ - 1) . $Shift_1$ is the amount of bit-shifting required when cWeight[i][j][k] or subC [i] [j] [k] is calculated ($Shift_1$ = Shift), or in the fixed-point operation for accuracy improvement in other links.

Spatial storage is performed on the predicted chroma value $C^{pred}$ [i] [j] of each to-be-predicted sample, i.e., the weighted chroma prediction output predWcp.

In the operation 1444, for each to-be-predicted sample, the predicted chroma value obtained by calculation is refined, including the clip operation.

The predicted chroma values in predWcp should be within the limited range, and if exceeded, a corresponding refinement operation should be performed.

For example, the clip operation may be performed on the predicted chroma value in $C^{pred}$[i] [j] as follows.

When the value of $C^{pred}[i][j]$ is less than 0, it is set to 0.

When the value of $C^{pred}[i][j]$ is greater than (1<<BitDepth)-1, it is set to (1<<BitDepth)-1.

In this way, it is ensured that all predicted values in predWcp are between 0 and (1<<BitDepth)-1.

That is,

$$C^{pred}[i][j] = \mathrm{Clip3}\left(0, (1 \ll \mathrm{BitDepth}) - 1, C^{pred}[i][j]\right) \qquad (32).$$

Herein,

$$\mathrm{Clip3}(x, y, z) = \begin{cases} x\,; z < x \\ y\,; z > y \\ z\,; \mathrm{otherwise} \end{cases} \qquad (33).$$

Alternatively, the operations of the above equations (32) and (33) are combined into the following equation (34) to complete.

$$C^{pred}[i][j] = \mathrm{Clip3}\left(0, (1 \ll \mathrm{BitDepth}) - 1\right), \left(\sum_{k=0}^{inSize-1} subC[i][j][k] + \mathrm{Offset}\right) \gg \mathrm{Shift}_1 \qquad (34).$$

In the operation 145, the post-processing process is performed on the chroma prediction calculation result.

Under certain conditions, it is necessary to take the weighted chroma prediction output predWcp on which post-processing is performed as the final predicted chroma value predSamples. Otherwise, the final predicted chroma value predSamples is predWcp.

The above solution may improve the accuracy of the WCP prediction technology. By optimizing the control parameter (T) in the WCP core parameters, when the content characteristics of the current block are different, the technical solution may adaptively select the best control parameter, further improve the weight model in the operation 144, and thereby obtain a more accurate chroma prediction value. The weight model adopted in the WCP prediction process better matches the content characteristics and spatial correlation of the current block, therefore, the predicted value may be more accurate.

The key innovation of the technical solution lies in optimization of control parameter configuration during the WCP prediction process.

(1) The content characteristics of the current block are fully utilized to improve the accuracy of the prediction process.
(2) The existing reconstructed sample information of the neighbouring regions is fully utilized to improve the accuracy of the prediction model.
(3) The characteristic information of the prediction block in different directions is fully considered to design different template matching methods.

Extended solution 1: the modification related to "3. Template matching" in the above solution is only an implementation method. The main idea is to directly select a best control parameter through template matching in a WCP chroma prediction mode. Multiple WCP chroma prediction modes are defined in the encoder, which correspond to combinations of different template types and different template reference regions. When the current block traverses all the chroma prediction modes for rate distortion optimization to select the best chroma prediction mode, and when encountering a WCP chroma prediction mode matching a certain template type, during the template selection process in the operation 1431, only one or relatively few template types and corresponding template reference regions will be selected.

Taking the above template and the left template as an example, three WCP chroma prediction modes with template matching, including WCP_L, WCP_T and WCP_LT, are added to the existing chroma prediction modes. WCP_L means that only the left template is used to select the best control parameter as the parameter of the weight model for the WCP prediction of the current block in the template matching operation of the WCP prediction process. WCP_T means that only the above template is used to select the best control parameter as the parameter of the weight model for the WCP prediction of the current block in the template matching operation of the WCP prediction process. WCP_LT means that only the left template and the above template are used to select the best control parameter as the parameter of the weight model for the WCP prediction of the current block in the template matching operation of the WCP prediction process, where the best control parameter is selected in a way similar to the case of multiple template types in the above solution. Other operations remain consistent with the solution of the above embodiments.

Extended solution 2: the main ideas of the solutions of the above embodiments are as follows. On the premise that respective best parameters are searched for in all the obtained templates, various weighted fusion is performed or multiple best parameters are retained for subsequent operations. However, in the implementation method, there may be a case where it cannot always be equal to the best parameter of the current block. Another implementation method is briefly described here.

Taking the case where both the above template and the left template can be obtained as an example, and taking the WCP_LT mode of the extended solution 1 as an example, "3.3. Select the best parameter" is modified as follows.

The operation 1432 introduces the WCP prediction processes for the above template and left template. In this way, the reconstructed chroma information in the respective templates and the predicted chroma information corresponding to a certain control parameter (T) are obtained. For the above template, the predicted chroma information corresponding to a certain control parameter ($T_k$) is $predAboveTempWcp_k$, and for the left template, the predicted chroma information corresponding to the certain control parameter ($T_k$) is $predLeftTempWcp_k$. Taking the MAE as an example, $MAE_A$ and $MAE_L$ are respectively calculated for the above template and the left template, and another evaluation criteria may also be adopted here.

$MAE_A$ and $MAE_L$ are added to obtain a sum of evaluations of the above template and the left template, $MAE_{Sum}$ (i.e., an example of the evaluation parameter), which corresponds to the control parameter ($T_k$). By loop traversing different control parameters (T) and repeating the above operations, multiple $MAE_{Sum}$ may be obtained. The control parameter (best_T) corresponding to the minimal $MAE_{Sum}$ is selected therefrom, and the weighted chroma prediction in the operation 144 is performed.

If $MAE_{Sum}$ corresponding to multiple control parameters are equal, the processing operation includes, but is not limited to, the following methods.

In a first method, the multiple control parameters are weighted fused into a best parameter best_T. As the standard of the weighted fusion, fixed weighting coefficients may be selected, or weighting coefficients may be allocated based on the number of samples in the template.

In a second method, the multiple control parameters are retained, and the weighted chroma prediction in the operation 144 is continued. The original chroma value and predicted chroma value of the current block are processed according to an evaluation criterion at the encoding end, and then the best parameter is selected from the two. The index of the above template or the left template may be signalled in the encoded bitstream, or the parameter value may be directly signalled in the encoded bitstream.

In a third method, similarly, the multiple control parameters are retained. During the weighted chroma prediction in the operation 144, neighbouring parameter values of these values are traversed, and the original chroma value and predicted chroma value of the current block are processed according to an evaluation criterion at the encoding end. The best parameter is selected from the narrowed parameter interval. The index of the best control parameter in the narrowed interval may be signalled in the encoded bitstream, or the parameter value may be directly signalled in the encoded bitstream.

If more than two templates are selected for subsequent operations in the above solution 1, processing may be performed according to the above cases.

It is to be noted that although various operations of the method of the disclosure are described in a particular order in the drawings, this does not require or imply that the operations must be performed in the particular order, or that all of the operations illustrated must be performed to achieve a desired result. Additionally or alternatively, some operations may be omitted, multiple operations may be combined into one operation for performing, and/or one operation may be decomposed into multiple operations for performing. Alternatively, operations in different embodiments may be combined into a new technical solution.

An embodiment of the disclosure provides an encoding apparatus. FIG. 18 is a schematic structural diagram of the encoding apparatus provided by the embodiment of the disclosure. As illustrated in FIG. 18, the encoding apparatus 18 includes a first determination module 181, a second determination module 182, a third determination module 183, and a first prediction module 184.

The first determination module 181 is configured to determine a first encoding parameter based on a template region.

The second determination module 182 is configured to determine a reference sample value of a first colour component of a current block.

The third determination module 183 is configured to determine a first weighting coefficient based on the reference sample value of the first colour component of the current block and the first encoding parameter.

The first prediction module 184 is configured to determine a first predicted value of a second colour component of the current block based on the first weighting coefficient and a reference sample value of the second colour component of the current block.

In some embodiments, the first determination module 181 includes a first determination unit and a second determination unit. The first determination unit is configured to determine a reference sample value of the template region. The second determination unit is configured to determine the first encoding parameter based on the reference sample value of the template region.

In some embodiments, the first determination unit is configured to: determine a reconstructed value of a first colour component of the template region, and a reconstructed value of a second colour component of the template region; and determine a reconstructed value of a first colour component of a reference region of the template region, and a reconstructed value of a second colour component of the reference region of the template region.

In some embodiments, the second determination unit includes a first sub-unit and a second sub-unit. The first sub-unit is configured to determine a first difference of the template region. The first difference of the template region is set to be equal to an absolute value of a difference between a reference value of the first colour component of the template region and a reference value of the first colour component of the reference region of the template region. The second sub-unit is configured to determine the first encoding parameter based on the first difference of the template region.

In some embodiments, the second sub-unit is configured to: determine second predicted value(s) of the second colour component of the template region based on the first difference and candidate first encoding parameter(s); determine first prediction error(s) of the second colour component of the template region; and determine the first encoding parameter based on the first prediction error(s). The first prediction error is an error between a reference value of the second colour component of the template region and the second predicted value of the second colour component of the template region. The reference value of the second colour component of the template region is the reconstructed value of the second colour component of the template region, or a value obtained by filtering the reconstructed value of the second colour component of the template region.

In some embodiments, the second sub-unit is further configured to determine the second weighting coefficients using a preset correspondence based on the first difference of the template region and the candidate first encoding parameter.

In some embodiments, the second sub-unit is configured to: select parameter(s) for which the first prediction error(s) satisfy a first condition from the candidate first encoding parameter(s) for the template region; and determine the first encoding parameter based on the parameter(s), for which the first prediction error(s) satisfy the first condition, corresponding to the template region.

In some embodiments, the second sub-unit is configured to: determine a sixth weighting coefficient based on the reference sample value of the first colour component of the current block and the candidate first encoding parameter for which the first prediction error satisfies the first condition; determine a third predicted value of the second colour component of the current block based on the sixth weighting coefficient and the reference sample value of the second colour component of the current block; determine a second prediction error of the corresponding candidate first encoding parameter for which the first prediction error satisfies the first condition based on the third predicted value and an original value of the second colour component of the current block; and determine the first encoding parameter based on second prediction error(s) of the candidate first encoding parameter(s) for which the first prediction error(s) satisfy the first condition.

In some embodiments, the second sub-unit is configured to: select candidate first encoding parameter(s) for which the second prediction error(s) satisfy a third condition from the candidate first encoding parameter(s) for which the first prediction error(s) satisfy the first condition; and determine the first encoding parameter based on the candidate first encoding parameter(s) for which the second prediction error(s) satisfy the third condition.

In some embodiments, the second sub-unit is configured to: set the first encoding parameter to be equal to the candidate first encoding parameter for which the second prediction error satisfies the third condition; or set the first encoding parameter to be equal to a fused value of the candidate first encoding parameters for which the second prediction errors satisfy the third condition.

In some embodiments, the second sub-unit is configured to: extend the candidate first encoding parameter for which the first prediction error satisfies the first condition to obtain a first extended parameter; determine a seventh weighting coefficient based on the reference sample value of the first colour component of the current block, the candidate first encoding parameter for which the first prediction error satisfies the first condition, and the first extended parameter; determine a fourth predicted value of the second colour component of the current block based on the seventh weighting coefficient and the reference sample value of the second colour component of the current block; determine a third prediction error of the corresponding parameter based on the fourth predicted value and an original value of the second colour component of the current block; and determine the first encoding parameter based on third prediction errors of the candidate first encoding parameter(s) and first extended parameter(s).

In some embodiments, the second sub-unit is configured to: select parameter(s) for which the third prediction error(s) satisfy a fourth condition from the candidate first encoding parameter(s) and the first extended parameter(s); and determine the first encoding parameter based on the parameter(s) for which the third prediction error(s) satisfy the fourth condition.

In some embodiments, the second sub-unit is configured to: set the first encoding parameter to be equal to the parameter for which the third prediction error satisfies the fourth condition; or set the first encoding parameter to be equal to a fused value of the parameters for which the third prediction errors satisfy the fourth condition.

In some embodiments, the second sub-unit is configured to: set the first encoding parameter to be equal to the parameter for which the first prediction error satisfies the first condition; or set the first encoding parameter to be equal to a fused value of the parameters for which the first prediction errors satisfy the first condition.

In some embodiments, the second sub-unit is configured to set the first encoding parameter to be equal to a weighted sum of the parameters for which the first prediction errors satisfy the first condition and third weighting coefficients.

In some embodiments, the second sub-unit is further configured to: determine the corresponding third weighting coefficient based on the first prediction error corresponding to the parameter for which the first prediction error satisfies the first condition; or set the third weighting coefficients to preset constant values.

In some embodiments, the second sub-unit is configured to: extend the parameter(s) for which the first prediction error(s) satisfy the first condition to obtain first extended parameter(s); and fuse the first extended parameter(s) and/or the parameter(s) for which the first prediction error(s) satisfy the first condition to obtain the first encoding parameter.

In some embodiments, the second sub-unit is configured to set the first encoding parameter to be equal to a weighted sum of the candidate first encoding parameters and fourth weighting coefficients.

In some embodiments, the second sub-unit is further configured to determine the fourth weighting coefficient for the corresponding candidate first encoding parameter based on the first prediction error.

In some embodiments, the second sub-unit is configured to: determine, based on respective first prediction errors corresponding to the same candidate first encoding parameter for the template region, an evaluation parameter representing a performance of the corresponding candidate first encoding parameter; and determine the first encoding parameter based on evaluation parameter(s) of the candidate first encoding parameter(s).

In some embodiments, the second sub-unit is configured to set the evaluation parameter to be equal to a fused value of the respective first prediction errors corresponding to the same candidate first encoding parameter for the template region.

In some embodiments, the second sub-unit is configured to set the evaluation parameter to be equal to a sum of the respective first prediction errors corresponding to the same candidate first encoding parameter for the template region.

In some embodiments, the second sub-unit is configured to: select parameter(s) for which the evaluation parameter(s) satisfy a second condition from the candidate first encoding parameter(s); and determine the first encoding parameter based on the parameter(s) for which the evaluation parameter(s) satisfy the second condition.

In some embodiments, the second sub-unit is configured to: set the first encoding parameter to be equal to the parameter for which the evaluation parameter satisfies the second condition; or set the first encoding parameter to be equal to a fused value of the parameters for which the evaluation parameters satisfy the second condition.

In some embodiments, the second sub-unit is configured to set the first encoding parameter to be equal to a weighted sum of the parameters for which the evaluation parameters satisfy the second condition and fifth weighting coefficients.

In some embodiments, the second sub-unit is further configured to determine, based on the template region corresponding to the parameter for which the evaluation parameter satisfies the second condition, the fifth weighting coefficient for the corresponding parameter.

In some embodiments, the second sub-unit is configured to determine, based on the number of samples and/or a template type of the template region corresponding to the parameter for which the evaluation parameter satisfies the second condition, the fifth weighting coefficient for the corresponding parameter.

In some embodiments, the second sub-unit is configured to: determine an eighth weighting coefficient based on the reference sample value of the first colour component of the current block and the parameter for which the evaluation parameter satisfies the second condition; determine a fifth predicted value of the second colour component of the current block based on the eighth weighting coefficient and the reference sample value of the second colour component of the current block; determine a fourth prediction error of the corresponding parameter for which the evaluation parameter satisfies the second condition based on the fifth predicted value and an original value of the second colour component of the current block; and determine the first encoding parameter based on fourth prediction error(s) of the candidate first encoding parameter(s).

In some embodiments, the second sub-unit is configured to: extend the parameter for which the evaluation parameter satisfies the second condition to obtain a second extended parameter; determine a ninth weighting coefficient based on the reference sample value of the first colour component of the current block, the parameter for which the evaluation parameter satisfies the second condition, and the second extended parameter; determine a sixth predicted value of the second colour component of the current block based on the ninth weighting coefficient and the reference sample value of the second colour component of the current block; determine a fifth prediction error of the corresponding parameter based on the sixth predicted value and an original value of the second colour component of the current block; and determine the first encoding parameter based on fifth prediction errors of the candidate first encoding parameter(s) and second extended parameter(s).

In some embodiments, the first determination module 181 is further configured to determine the template region based on a template type included in a configured prediction mode.

In some embodiments, the first determination module 181 is configured to take a template included in the configured prediction mode as the template region.

In some embodiments, the first determination module 181 is further configured to determine the template region based on sample availability of a neighbouring region of the current block. Based on a relative positional relationship with the current block, the neighbouring region includes at least one of: a top region of the current block, a left region of the current block, a top right region of the current block, a bottom left region of the current block, or a top left region of the current block.

In some embodiments, the first prediction module 184 is further configured to take, when the template region does not exist, a default value as a predicted value of the second colour component of the current block.

In some embodiments, the first prediction module 184 is further configured to determine, when the template region does not exist, a predicted value of the second colour component of the current block by another prediction method different from the method.

In some embodiments, the second sub-unit is configured to set a second predicted value for determining the first prediction error to be equal to a second predicted value obtained by performing a refinement operation on the second predicted value of the second colour component of the template region.

In some embodiments, the encoding apparatus 18 further includes a first acquisition module, a seventh determination module and an encoding module. The first acquisition module is configured to obtain an original value of the second colour component of the current block. The seventh determination module is configured to determine a residual value of the second colour component of the current block based on the original value of the second colour component of the current block and the first predicted value of the second colour component. The encoding module is configured to encode the residual value of the second colour component of the current block, and signal obtained encoded bits in a bitstream.

In some embodiments, the encoding apparatus 18 further includes a first refinement module, a first acquisition module, an eighth determination module and an encoding module. The first refinement module is configured to perform a refinement operation on the first predicted value of the second colour component of the current block to obtain a refined first predicted value. The first acquisition module is configured to obtain an original value of the second colour component of the current block. The eighth determination module is configured to determine a residual value of the second colour component of the current block based on the original value of the second colour component of the current block and the refined first predicted value. The encoding module is configured to encode the residual value of the second colour component of the current block, and signal obtained encoded bits in a bitstream.

In some embodiments, the encoding apparatus 18 further includes an encoding module. The encoding module is configured to encode the first encoding parameter or an index of the first encoding parameter, and signal obtained encoded bits in a bitstream.

It is to be understood that in the embodiments of the disclosure, a "module" may be a part of a circuit, a part of a processor, a part of a program or software, or the like, and of course, may also be a unit, or may be non-unitized. In addition, each component in the embodiments may be integrated in a processing unit, or each module may physically exist separately, or two or more modules may be integrated in a unit. The above integrated modules may be implemented in the form of hardware or software function modules.

When implemented in the form of a software function module and sold or used as an independent product, the integrated module may be stored in a computer-readable storage medium. Based on such understanding, the technical solution of the embodiments essentially or parts making contributions to the related art or all or part of the technical solution may be embodied in the form of a software product. The computer software product is stored in a storage medium, including several instructions for enabling a computer device (which may be a personal computer, a server, a network device, or the like) or a processor to perform all or part of the operations of the method in the embodiments. The above storage medium includes various media capable of storing program codes, such as a USB disk, a mobile hard disk, a Read Only Memory (ROM), a Random Access Memory (RAM), a magnetic disk, an optical disk, or the like.

Accordingly, an embodiment of the disclosure provides a computer-readable storage medium having stored a computer program thereon. The computer program, when executed by a first processor, implements the method of any one of the above embodiments.

Based on the composition of the above encoding apparatus 18 and the computer-readable storage medium, FIG. 19 illustrates a schematic diagram of a specific hardware structure of an encoding device provided by an embodiment of the disclosure. As illustrated in FIG. 19, the encoding device 19 may include a first communication interface 191, a first memory 192 and a first processor 193. The various components are coupled together through a first bus system 194. It is to be understood that the first bus system 194 is configured to achieve connection communication among these components. Addition to a data bus, the first bus system 194 further includes a power bus, a control bus, and a status signal bus. However, for the sake of clear illustration, the various buses are denoted as the first bus system 194 in FIG. 19.

The first communication interface 191 is configured to receive and send signals during the process of receiving information from and sending information to other external network elements.

The first memory 192 is configured to store a computer program executable on the first processor 193.

The first processor 193 is configured to, when running the computer program, perform the following operations. A first encoding parameter is determined based on a template region. A reference sample value of a first colour component of a current block is determined. A first weighting coefficient is determined based on the reference sample value of the first colour component of the current block and the first encoding parameter. A first predicted value of a second colour component of the current block is determined based on the first weighting coefficient and a reference sample value of the second colour component of the current block.

It is to be understood that the first memory 192 in the embodiments of the disclosure may be a volatile memory or a non-volatile memory, or may include a volatile memory and a non-volatile memory. The non-volatile memory may be a ROM, a Programmable ROM (PROM), an Erasable PROM (EPROM), an Electrically EPROM (EEPROM) or a flash memory. The volatile memory may be a RAM, and is used as an external high-speed cache. It is exemplarily but unlimitedly illustrated that RAMs in various forms may be used, such as a Static RAM (SRAM), a Dynamic RAM (DRAM), a Synchronous DRAM (SDRAM), a Double Data Rate SDRAM (DDRSDRAM), an Enhanced SDRAM (ESDRAM), a Synchlink DRAM (SLDRAM) or a Direct Rambus RAM (DRRAM). The first memory 222 of the systems and methods described herein is intended to include memories of these and any other proper types, but is not limited thereto.

The first processor 193 may be an integrated circuit chip with a signal processing capability. During an implementation process, various operations in the above method may be completed by a hardware integrated logic circuit or instructions in the form of software in the first processor 193. The above first processor 193 may be a general purpose processor, a Digital Signal Processor (DSP), an Application Specific Integrated Circuit (ASIC), a Field Programmable Gate Array (FPGA) or other programmable logic devices, discrete gates or transistor logic devices, or discrete hardware components. Various methods, operations and logic block diagrams disclosed in the embodiments of the disclosure may be implemented or executed. The general purpose processor may be a microprocessor, or the processor may be any conventional processor, or the like. Operations in combination with the methods disclosed in the embodiments of the disclosure may be directly embodied to be executed and completed by a hardware decoding processor, or by a combination of hardware and software modules in the decoding processor. The software module may be located in a mature storage medium in the art, such as a RAM, a flash memory, a ROM, a PROM, an EEPROM, a register, or the like. The storage medium is located in the first memory 192, and the first processor 193 reads the information in the first memory 192 to complete the operations of the above methods in combination with its hardware.

It is to be understood that the embodiments described herein may be implemented by hardware, software, firmware, middleware, microcode, or a combination thereof. For a hardware implementation, the processing unit may be implemented in one or more ASICs, DSPs, DSP Devices (DSPDs), Programmable Logic Devices (PLDs), FPGAs, general purpose processors, controllers, microcontrollers, microprocessors, other electronic units for performing the functions described herein, or a combination thereof. For a software implementation, the technology described herein may be implemented by a module (e.g., a process, a function, or the like) that performs the functions described herein. The software codes may be stored in a memory and executed by a processor. The memory may be implemented in the processor or external to the processor.

Optionally, as another embodiment, the first processor 193 is further configured to, when running the computer program, perform the method of any one of the above embodiments.

In yet another embodiment of the disclosure, based on the same inventive concept as the above embodiments, FIG. 20 illustrates a schematic diagram of a composition structure of a decoding apparatus provided by the embodiment of the disclosure. As illustrated in FIG. 20, the decoding apparatus 200 may include a fourth determination module 2001, a fifth determination module 2002, a sixth determination module 2003 and a second prediction module 2004.

The fourth determination module 2001 is configured to determine a first decoding parameter based on a template region.

The fifth determination module 2002 is configured to determine a reference sample value of a first colour component of a current block.

The sixth determination module 2003 is configured to determine a first weighting coefficient based on the reference sample value of the first colour component of the current block and the first decoding parameter.

The second prediction module 2004 is configured to determine a first predicted value of a second colour component of the current block based on the first weighting coefficient and a reference sample value of the second colour component of the current block.

In some embodiments, the fourth determination module 2001 includes a third determination unit and a fourth determination unit. The third determination unit is configured to determine a reference sample value of the template region. The fourth determination unit is configured to determine the first decoding parameter based on the reference sample value of the template region.

In some embodiments, the third determination unit is configured to: determine a reconstructed value of a first colour component of the template region, and a reconstructed value of a second colour component of the template region; and determine a reconstructed value of a first colour component of a reference region of the template region, and a reconstructed value of a second colour component of the reference region of the template region.

In some embodiments, the fourth determination unit includes a third sub-unit and a fourth sub-unit. The third sub-unit is configured to determine a first difference of the template region. The first difference of the template region is set to be equal to an absolute value of a difference between a reference value of the first colour component of the template region and a reference value of the first colour component of the reference region of the template region. The fourth sub-unit is configured to determine the first decoding parameter based on the first difference of the template region.

In some embodiments, the reference value of the first colour component of the template region is the reconstructed value of the first colour component of the template region, or a value obtained by filtering the reconstructed value of the first colour component of the template region. The reference value of the first colour component of the reference region of the template region is the reconstructed value of the first colour component of the reference region of the template region, or a value obtained by filtering the reconstructed value of the first colour component of the reference region of the template region.

In some embodiments, the fourth sub-unit is configured to: determine second predicted value(s) of the second colour component of the template region based on the first difference and candidate first decoding parameter(s); determine first prediction error(s) of the second colour component of the template region; and determine the first decoding parameter based on the first prediction error(s). The first prediction error is an error between a reference value of the second colour component of the template region and the second predicted value of the second colour component of the template region. The reference value of the second colour component of the template region is the reconstructed value of the second colour component of the template region, or a value obtained by filtering the reconstructed value of the second colour component of the template region.

In some embodiments, the fourth sub-unit is configured to: set the second predicted value of the second colour component of the template region to be equal to a weighted sum of each reference value of the second colour component of the reference region of the template region and a respective second weighting coefficient; and set the first decoding parameter to be equal to a value of the corresponding candidate first decoding parameter when the first prediction error satisfies a first condition. The reference value of the second colour component of the reference region of the template region is the reconstructed value of the second colour component of the reference region of the template region, or a value obtained by filtering the reconstructed value of the second colour component of the reference region of the template region.

In some embodiments, the fourth sub-unit is further configured to determine the second weighting coefficient using a preset correspondence based on the first difference of the template region and the candidate first decoding parameter.

In some embodiments, the fourth sub-unit is configured to: select parameter(s) for which the first prediction error(s) satisfy a first condition from the candidate first decoding parameter(s) for the template region; and determine the first decoding parameter based on the parameter(s), for which the first prediction error(s) satisfy the first condition, corresponding to the template region.

In some embodiments, the fourth sub-unit is configured to set the first decoding parameter to be equal to the parameter for which the first prediction error satisfies the first condition; or set the first decoding parameter to be equal to a fused value of the parameters for which the first prediction errors satisfy the first condition.

In some embodiments, the fourth sub-unit is configured to set the first decoding parameter to be equal to a weighted sum of the parameters for which the first prediction errors satisfy the first condition and third weighting coefficients.

In some embodiments, the fourth sub-unit is further configured to: determine the corresponding third weighting coefficient based on the first prediction error corresponding to the parameter for which the first prediction error satisfies the first condition; or set the third weighting coefficients to preset constant values.

In some embodiments, the fourth sub-unit is configured to: extend the parameter(s) for which the first prediction error(s) satisfy the first condition to obtain first extended parameter(s); and fuse the first extended parameter(s) and/or the parameter(s) for which the first prediction error(s) satisfy the first condition to obtain the first decoding parameter.

In some embodiments, the fourth sub-unit is configured to set the first decoding parameter to be equal to a weighted sum of the candidate first decoding parameters and fourth weighting coefficients.

In some embodiments, the fourth sub-unit is further configured to determine the fourth weighting coefficient for the corresponding candidate first decoding parameter based on the first prediction error.

In some embodiments, the first condition includes: the first prediction error being minimal, or the first prediction error being less than a first threshold.

In some embodiments, the fourth sub-unit is configured to: determine, based on respective first prediction errors corresponding to the same candidate first decoding parameter for the template region, an evaluation parameter representing a performance of the candidate first decoding parameter; and determine the first decoding parameter based on evaluation parameter(s) of the candidate first decoding parameter(s).

In some embodiments, the fourth sub-unit is configured to set the evaluation parameter to be equal to a fused value of the respective first prediction errors corresponding to the same candidate first decoding parameter for the template region.

In some embodiments, the fourth sub-unit is configured to set the evaluation parameter to be equal to a sum of the respective first prediction errors corresponding to the same candidate first decoding parameter for the template region.

In some embodiments, the fourth sub-unit is configured to: select parameter(s) for which the evaluation parameter(s) satisfy a second condition from the candidate first decoding parameter(s); and determine the first decoding parameter based on the parameter(s) for which the evaluation parameter(s) satisfy the second condition.

In some embodiments, the fourth sub-unit is configured to: set the first decoding parameter to be equal to the parameter for which the evaluation parameter satisfies the second condition; or set the first decoding parameter to be equal to a fused value of the parameters for which the evaluation parameters satisfy the second condition.

In some embodiments, the fourth sub-unit is configured to set the first decoding parameter is set to be equal to a weighted sum of the parameters for which the evaluation parameters satisfy the second condition and fifth weighting coefficients.

In some embodiments, the fourth sub-unit is further configured to determine, based on the template region corresponding to the parameter for which the evaluation parameter satisfies the second condition, the fifth weighting coefficient for the corresponding parameter.

In some embodiments, the fourth sub-unit is configured to determine, based on the number of samples and/or a template type of the template region corresponding to the parameter for which the evaluation parameter satisfies the second condition, the fifth weighting coefficient for the corresponding parameter.

In some embodiments, the decoding apparatus 200 further includes a parsing module and a second acquisition module. The parsing module is configured to parse a bitstream to obtain an index of the first decoding parameter. The second acquisition module is configured to obtain the first decoding parameter based on the index of the first decoding parameter. Alternatively, the parsing module is configured to parse a bitstream to obtain the first decoding parameter.

In some embodiments, the fourth determination module 2001 is further configured to determine the template region based on a template type included in a configured prediction mode.

In some embodiments, the template type includes at least one of: an above template, a left template, an above right template, a below left template, or an above left template.

In some embodiments, the fourth determination module 2001 is configured to set the template region to be a region corresponding to the template type included in the configured prediction mode.

In some embodiments, the fourth determination module 2001 is further configured to determine the template region based on sample availability of a neighbouring region of the current block. The neighbouring region includes at least one of: a top region of the current block, a left region of the current block, a top right region of the current block, a bottom left region of the current block, or a top left region of the current block.

In some embodiments, the second prediction module 2004 is further configured to take, based on determining that the template region does not exist, a default value as a predicted value of the second colour component of the current block.

In some embodiments, the second prediction module 2004 is further configured to determine, based on determining that the template region does not exist, a predicted value of the second colour component of the current block by another prediction method different from the method.

In some embodiments, the fourth sub-unit is configured to set a second predicted value for determining the first prediction error to be equal to a second predicted value obtained by performing a refinement operation on the second predicted value of the second colour component of the template region.

In some embodiments, the decoding apparatus 200 further includes a parsing module and a ninth determination module. The parsing module is configured to parse a bitstream to obtain a residual value of the second colour component of the current block. The ninth determination module is configured to determine a reconstructed value of the second colour component of the current block based on the residual value of the second colour component and the first predicted value of the second colour component of the current block.

In some embodiments, the decoding apparatus 200 further includes a second refinement module and a tenth determination module. The second refinement module is configured to perform a refinement operation on the first predicted value of the second colour component of the current block to obtain a refined first predicted value. The tenth determination module is configured to determine a reconstructed value of the second colour component of the current block based on a residual value of the second colour component and the refined first predicted value.

It is to be understood that in the embodiments of the disclosure, a "module" may be a part of a circuit, a part of a processor, a part of a program or software, or the like, and of course, may also be a unit, or may be non-unitized. In addition, each component in the embodiments may be integrated in a processing unit, or each module may physically exist separately, or two or more modules may be integrated in a unit. The above integrated modules may be implemented in the form of hardware or software function modules.

When implemented in the form of a software function module and sold or used as an independent product, the integrated module may be stored in a computer-readable storage medium. Based on such understanding, the embodiment provides a computer-readable storage medium having stored a computer program thereon. The computer program, when executed by a second processor, implements the method of any one of the above embodiments.

Based on the composition of the above decoding apparatus 200 and the computer-readable storage medium, FIG. 21 illustrates a schematic diagram of a specific hardware structure of a decoding device provided by an embodiment of the disclosure. As illustrated in FIG. 21, the decoding device 21 may include a second communication interface 211, a second memory 212 and a second processor 213. The various components are coupled together through a second bus system 214. It is to be understood that the second bus system 214 is configured to achieve connection communication among these components. Addition to a data bus, the second bus system 214 further includes a power bus, a control bus, and a status signal bus. However, for the sake of clear illustration, the various buses are denoted as the second bus system 214 in FIG. 21.

The second communication interface 211 is configured to receive and send signals during the process of receiving information from and sending information to other external network elements. The second memory 212 is configured to store a computer program executable on the second processor 213. The second processor 213 is configured to, when running the computer program, perform the method of any one of the above embodiments.

Optionally, as another embodiment, the second processor 213 is further configured to, when running the computer program, perform the method of any one of the above embodiments.

It is to be understood that the hardware function of the second memory 212 is similar to that of the first memory 222, and the hardware function of the second processor 213 is similar to that of the first processor 223, which will not be further described here.

In yet another embodiment of the disclosure, FIG. 22 illustrates a schematic diagram of a composition structure of an encoding and decoding system provided by an embodiment of the disclosure. As illustrated in FIG. 22, the encoding and decoding system 22 may include an encoder 221 and a decoder 222. The encoder 221 may be a device integrated with the encoding apparatus 18 described in the above embodiments, or may be the encoding device 19 described in the above embodiments. The decoder 222 may be a device integrated with the decoding apparatus 200 described in the above embodiments, or may be the decoding device 21 described in the above embodiments.

It is to be noted that in the disclosure, terms "include" "contain" or any other variation thereof are intended to encompass a non-exclusive inclusion such that a process, method, article, or apparatus including a series of elements includes not only those elements but also other elements not explicitly listed, or elements inherent to such process, method, article, or apparatus. Without further limitation, an element limited by the statement "including a ..." does not preclude the existence of additional identical elements in a process, method, article, or apparatus that includes the element.

The above serial numbers of the embodiments of the disclosure are for the purpose of description only, and do not represent the advantages and disadvantages of the embodiments. Methods disclosed in several method embodiments provided by the disclosure may be arbitrarily combined without conflict to obtain new method embodiments. Features disclosed in several product embodiments provided by the disclosure may be arbitrarily combined without conflict to obtain new product embodiments. Features disclosed in several method or device embodiments provided by the disclosure may be arbitrarily combined without conflict to obtain new method or device embodiments. The above are only specific implementations of the disclosure, but the scope of protection of the disclosure is not limited thereto. Any variations or replacements apparent to those skilled in the art within the technical scope disclosed by the disclosure shall fall within the scope of protection of the disclosure. Therefore, the scope of protection of the disclosure shall be subject to the scope of protection of the claims.

## Claims

**1.** A decoding method, comprising:

determining a first decoding parameter based on a template region;
determining a reference sample value of a first colour component of a current block;
determining a first weighting coefficient based on the reference sample value of the first colour component of the current block and the first decoding parameter; and
determining a first predicted value of a second colour component of the current block based on the first weighting coefficient and a reference sample value of the second colour component of the current block.

**2.** The method of claim 1, wherein determining the first decoding parameter based on the template region comprises:

determining a reference sample value of the template region; and
determining the first decoding parameter based on the reference sample value of the template region.

**3.** The method of claim 2, wherein determining the reference sample value of the template region comprises:

determining a reconstructed value of a first colour component of the template region, and a reconstructed value of a second colour component of the template region; and
determining a reconstructed value of a first colour component of a reference region of the template region, and a reconstructed value of a second colour component of the reference region of the template region.

**4.** The method of claim 3, wherein determining the first decoding parameter based on the reference sample value of the template region comprises:

determining a first difference of the template region, wherein the first difference of the template region is set to be equal to an absolute value of a difference between a reference value of the first colour component of the template region and a reference value of the first colour component of the reference region of the template region; and determining the first decoding parameter based on the first difference of the template region.

**5.** The method of claim 4, wherein

the reference value of the first colour component of the template region is the reconstructed value of the first colour component of the template region, or a value obtained by filtering the reconstructed value of the first colour component of the template region; and

the reference value of the first colour component of the reference region of the template region is the reconstructed value of the first colour component of the reference region of the template region, or a value obtained by filtering the reconstructed value of the first colour component of the reference region of the template region.

**6.** The method of claim 4, wherein determining the first decoding parameter based on the first difference of the template region comprises:

determining second predicted value(s) of the second colour component of the template region based on the first difference and candidate first decoding parameter(s);

determining first prediction error(s) of the second colour component of the template region; and

determining the first decoding parameter based on the first prediction error(s);

wherein the first prediction error is an error between a reference value of the second colour component of the template region and the second predicted value of the second colour component of the template region, and the reference value of the second colour component of the template region is the reconstructed value of the second colour component of the template region, or a value obtained by filtering the reconstructed value of the second colour component of the template region.

**7.** The method of claim 6, wherein

the second predicted value of the second colour component of the template region is set to be equal to a weighted sum of each reference value of the second colour component of the reference region of the template region and a respective second weighting coefficient; and

the first decoding parameter is set to be equal to a value of the corresponding candidate first decoding parameter when the first prediction error satisfies a first condition;

wherein the reference value of the second colour component of the reference region of the template region is the reconstructed value of the second colour component of the reference region of the template region, or a value obtained by filtering the reconstructed value of the second colour component of the reference region of the template region.

**8.** The method of claim 7, wherein
the second weighting coefficient is determined using a preset correspondence based on the first difference of the template region and the candidate first decoding parameter.

**9.** The method of claim 8, wherein
the preset correspondence is a softmax function, or the preset correspondence is obtained using the softmax function; and an input of the softmax function is one of:

a ratio of the first difference to the candidate first decoding parameter;

a product of the first difference and the candidate first decoding parameter; or

a value obtained by bit-shifting the first difference, wherein a number of bits of the bit-shifting is equal to the candidate first decoding parameter.

**10.** The method of claim 6, wherein the candidate first decoding parameter(s) comprises one or more candidate first decoding parameters.

**11.** The method of claim 3, wherein the reference region of the template region comprises at least one of:

a top neighbouring region of the template region;

a bottom neighbouring region of the template region;
a left neighbouring region of the template region;
a right neighbouring region of the template region; or
the template region.

**12.** The method of claim 6, wherein determining the first decoding parameter based on the first prediction error(s) comprises:

selecting parameter(s) for which the first prediction error(s) satisfy a first condition from the candidate first decoding parameters for the template region; and
determining the first decoding parameter based on the parameter(s), for which the first prediction error(s) satisfy the first condition, corresponding to the template region.

**13.** The method of claim 12, wherein

the first decoding parameter is set to be equal to the parameter for which the first prediction error satisfies the first condition; or
the first decoding parameter is set to be equal to a fused value of the parameters for which the first prediction errors satisfy the first condition.

**14.** The method of claim 13, wherein
the first decoding parameter is set to be equal to a weighted sum of the parameters for which the first prediction errors satisfy the first condition and third weighting coefficients.

**15.** The method of claim 14, further comprising:
determining the corresponding third weighting coefficient based on the first prediction error corresponding to the parameter for which the first prediction error satisfies the first condition; or setting the third weighting coefficients to preset constant values.

**16.** The method of claim 12, wherein the determining the first decoding parameter based on the parameter(s) for which the first prediction error(s) satisfy the first condition corresponding to the template region comprises:

extending the parameter(s) for which the first prediction error(s) satisfy the first condition to obtain first extended parameter(s); and
fusing the first extended parameter(s) and/or the parameter(s) for which the first prediction error(s) satisfy the first condition to obtain the first decoding parameter.

**17.** The method of claim 6, wherein
the first decoding parameter is set to be equal to a weighted sum of the candidate first decoding parameters and fourth weighting coefficients.

**18.** The method of claim 17, further comprising:
determining the fourth weighting coefficient for the corresponding candidate first decoding parameter based on the first prediction error.

**19.** The method of any one of claims 12 to 16, wherein the first condition comprises: the first prediction error being minimal, the first prediction error being less than a first threshold, the first prediction error being maximal, or the first prediction error being greater than a third threshold.

**20.** The method of claim 6, wherein determining the first decoding parameter based on the first prediction error(s) comprises:

determining, based on respective first prediction errors corresponding to the same candidate first decoding parameter for the template region, an evaluation parameter representing a performance of the candidate first decoding parameter; and
determining the first decoding parameter based on evaluation parameter(s) of the candidate first decoding parameter(s).

**21.** The method of claim 20, wherein
the evaluation parameter is set to be equal to a fused value of the respective first prediction errors corresponding to the same candidate first decoding parameter for the template region.

**22.** The method of claim 21, wherein
the evaluation parameter is set to be equal to a sum of the respective first prediction errors corresponding to the same candidate first decoding parameter for the template region.

**23.** The method of claim 20, wherein determining the first decoding parameter based on the evaluation parameter(s) of the candidate first decoding parameter(s) comprises:

selecting parameter(s) for which the evaluation parameter(s) satisfy a second condition from the candidate first decoding parameters; and
determining the first decoding parameter based on the parameter(s) for which the evaluation parameter(s) satisfy the second condition.

**24.** The method of claim 23, wherein

the first decoding parameter is set to be equal to the parameter for which the evaluation parameter satisfies the second condition; or
the first decoding parameter is set to be equal to a fused value of the parameters for which the evaluation parameters satisfy the second condition.

**25.** The method of claim 24, wherein
the first decoding parameter is set to be equal to a weighted sum of the parameters for which the evaluation parameters satisfy the second condition and fifth weighting coefficients.

**26.** The method of claim 25, further comprising:
determining, based on the template region corresponding to the parameter for which the evaluation parameter satisfies the second condition, the fifth weighting coefficient for the corresponding parameter.

**27.** The method of claim 26, wherein determining, based on the template region corresponding to the parameter for which the evaluation parameter satisfies the second condition, the fifth weighting coefficient for the corresponding parameter comprises:
determining, based on a number of samples and/or a template type of the template region corresponding to the parameter for which the evaluation parameter satisfies the second condition, the fifth weighting coefficient for the corresponding parameter.

**28.** The method of claim 25, wherein the fifth weighting coefficients are preset constant values.

**29.** The method of any one of claims 23 to 28, wherein the second condition comprises: the evaluation parameter being minimal, the evaluation parameter being less than a second threshold, the evaluation parameter being maximal, or the evaluation parameter being greater than a fourth threshold.

**30.** The method of claim 1, further comprising:

parsing a bitstream to obtain an index of the first decoding parameter, and obtaining the first decoding parameter based on the index of the first decoding parameter; or
parsing a bitstream to obtain the first decoding parameter.

**31.** The method of claim 1, further comprising:
determining the template region based on a template type comprised in a configured prediction mode.

**32.** The method of claim 31, wherein the template type comprises at least one of: an above template, a left template, an above right template, a below left template, or an above left template.

**33.** The method of claim 32, wherein
the template region is set to be a region corresponding to the template type comprised in the configured prediction mode.

**34.** The method of claim 1, further comprising:

determining the template region based on sample availability of a neighbouring region of the current block; wherein the neighbouring region comprises at least one of: a top region of the current block, a left region of the current block, a top right region of the current block, a bottom left region of the current block, or a top left region of the current block.

**35.** The method of claim 1, further comprising:
taking, based on determining that the template region does not exist, a default value as a predicted value of the second colour component of the current block.

**36.** The method of claim 1, further comprising:
determining, based on determining that the template region does not exist, a predicted value of the second colour component of the current block by another prediction method different from the method.

**37.** The method of claim 6, wherein
a second predicted value for determining the first prediction error is set to be equal to a second predicted value obtained by performing a refinement operation on the second predicted value of the second colour component of the template region.

**38.** The method of claim 1, further comprising:

parsing a bitstream to obtain a residual value of the second colour component of the current block; and
determining a reconstructed value of the second colour component of the current block based on the residual value of the second colour component and the first predicted value of the second colour component of the current block.

**39.** The method of claim 1, further comprising:

performing a refinement operation on the first predicted value of the second colour component of the current block to obtain a refined first predicted value; and
determining a reconstructed value of the second colour component of the current block based on a residual value of the second colour component and the refined first predicted value.

**40.** An encoding method, comprising:

determining a first encoding parameter based on a template region;
determining a reference sample value of a first colour component of a current block;
determining a first weighting coefficient based on the reference sample value of the first colour component of the current block and the first encoding parameter; and
determining a first predicted value of a second colour component of the current block based on the first weighting coefficient and a reference sample value of the second colour component of the current block.

**41.** The method of claim 1, wherein determining the first encoding parameter based on the template region comprises:

determining a reference sample value of the template region; and
determining the first encoding parameter based on the reference sample value of the template region.

**42.** The method of claim 41, wherein determining the reference sample value of the template region comprises:

determining a reconstructed value of a first colour component of the template region, and a reconstructed value of a second colour component of the template region; and
determining a reconstructed value of a first colour component of a reference region of the template region, and a reconstructed value of a second colour component of the reference region of the template region.

**43.** The method of claim 42, wherein determining the first encoding parameter based on the reference sample value of the template region comprises:

determining a first difference of the template region, wherein the first difference of the template region is set to be equal to an absolute value of a difference between a reference value of the first colour component of the template region and a reference value of the first colour component of the reference region of the template region; and
determining the first encoding parameter based on the first difference of the template region.

**44.** The method of claim 43, wherein

the reference value of the first colour component of the template region is the reconstructed value of the first colour component of the template region, or a value obtained by filtering the reconstructed value of the first colour component of the template region; or the reference value of the first colour component of the template region is an original value of the first colour component of the template region, or a value obtained by filtering the original value of the first colour component of the template region; and
the reference value of the first colour component of the reference region of the template region is the reconstructed value of the first colour component of the reference region of the template region, or a value obtained by filtering the reconstructed value of the first colour component of the reference region of the template region.

**45.** The method of claim 43, wherein determining the first encoding parameter based on the first difference of the template region comprises:

determining second predicted value(s) of the second colour component of the template region based on the first difference and candidate first encoding parameter(s);
determining first prediction error(s) of the second colour component of the template region; and
determining the first encoding parameter based on the first prediction error(s);
wherein the first prediction error is an error between a reference value of the second colour component of the template region and the second predicted value of the second colour component of the template region, and the reference value of the second colour component of the template region is the reconstructed value of the second colour component of the template region, or a value obtained by filtering the reconstructed value of the second colour component of the template region.

**46.** The method of claim 45, wherein

the second predicted value of the second colour component of the template region is set to be equal to a weighted sum of each reference value of the second colour component of the reference region of the template region and a respective second weighting coefficient; and
the first encoding parameter is set to be equal to a value of the corresponding candidate first encoding parameter when the first prediction error satisfies a first condition;
wherein the reference value of the second colour component of the reference region of the template region is the reconstructed value of the second colour component of the reference region of the template region, or a value obtained by filtering the reconstructed value of the second colour component of the reference region of the template region.

**47.** The method of claim 46, wherein
the second weighting coefficient is determined using a preset correspondence based on the first difference of the template region and the candidate first encoding parameter.

**48.** The method of claim 47, wherein
the preset correspondence is a softmax function, or the preset correspondence is obtained using the softmax function; and an input of the softmax function is one of:

a ratio of the first difference to the candidate first encoding parameter;
a product of the first difference and the candidate first encoding parameter; or
a value obtained by bit-shifting the first difference, wherein a number of bits of the bit-shifting is equal to the candidate first encoding parameter.

**49.** The method of claim 45, wherein the candidate first encoding parameter(s) comprises one or more candidate first encoding parameters.

**50.** The method of claim 42, wherein the reference region of the template region comprises at least one of:

a top neighbouring region of the template region;
a bottom neighbouring region of the template region;
a left neighbouring region of the template region;
a right neighbouring region of the template region; or
the template region.

**51.** The method of claim 45, wherein determining the first encoding parameter based on the first prediction error(s) comprises:

selecting parameter(s) for which the first prediction error(s) satisfy a first condition from the candidate first encoding parameters for the template region; and
determining the first encoding parameter based on the parameter(s), for which the first prediction error(s) satisfy the first condition, corresponding to the template region.

**52.** The method of claim 51, wherein determining the first encoding parameter based on the parameter(s) for which the first prediction error(s) satisfy the first condition corresponding to the template region comprises:

determining a sixth weighting coefficient based on the reference sample value of the first colour component of the current block and the candidate first encoding parameter for which the first prediction error satisfies the first condition;
determining a third predicted value of the second colour component of the current block based on the sixth weighting coefficient and the reference sample value of the second colour component of the current block;
determining a second prediction error of the corresponding candidate first encoding parameter for which the first prediction error satisfies the first condition based on the third predicted value and an original value of the second colour component of the current block; and
determining the first encoding parameter based on second prediction error(s) of the candidate first encoding parameter(s) for which the first prediction error(s) satisfy the first condition.

**53.** The method of claim 52, wherein determining the first encoding parameter based on the second prediction error(s) of the candidate first encoding parameter(s) for which the first prediction error(s) satisfy the first condition comprises:

selecting candidate first encoding parameter(s) for which the second prediction error(s) satisfy a third condition from the candidate first encoding parameters for which the first prediction errors satisfy the first condition; and
determining the first encoding parameter based on the candidate first encoding parameter(s) for which the second prediction error(s) satisfy the third condition.

**54.** The method of claim 53, wherein

the first encoding parameter is set to be equal to the candidate first encoding parameter for which the second prediction error satisfies the third condition; or
the first encoding parameter is set to be equal to a fused value of the candidate first encoding parameters for which the second prediction errors satisfy the third condition.

**55.** The method of claim 53, wherein the third condition comprises: the second prediction error being minimal or maximal.

**56.** The method of claim 51, wherein determining the first encoding parameter based on the parameter(s) for which the first prediction error(s) satisfy the first condition corresponding to the template region comprises:

extending the candidate first encoding parameter for which the first prediction error satisfies the first condition to obtain a first extended parameter;
determining a seventh weighting coefficient based on the reference sample value of the first colour component of the current block, the candidate first encoding parameter for which the first prediction error satisfies the first condition, and the first extended parameter;
determining a fourth predicted value of the second colour component of the current block based on the seventh weighting coefficient and the reference sample value of the second colour component of the current block;
determining a third prediction error of the corresponding parameter based on the fourth predicted value and an original value of the second colour component of the current block; and
determining the first encoding parameter based on third prediction error(s) of the candidate first encoding parameter(s) and first extended parameter(s).

**57.** The method of claim 56, wherein determining the first encoding parameter based on the third prediction error(s) of the candidate first encoding parameter(s) and the first extended parameter(s) comprises:

selecting parameter(s) for which the third prediction error(s) satisfy a fourth condition from the candidate first encoding parameters and the first extended parameters; and
determining the first encoding parameter based on the parameter(s) for which the third prediction error(s) satisfy the fourth condition.

**58.** The method of claim 57, wherein

the first encoding parameter is set to be equal to the parameter for which the third prediction error satisfies the fourth condition; or
the first encoding parameter is set to be equal to a fused value of the parameters for which the third prediction errors satisfy the fourth condition.

**59.** The method of claim 57, wherein the fourth condition comprises: the third prediction error being minimal or maximal.

**60.** The method of claim 51, wherein

the first encoding parameter is set to be equal to the parameter for which the first prediction error satisfies the first condition; or
the first encoding parameter is set to be equal to a fused value of the parameters for which the first prediction errors satisfy the first condition.

**61.** The method of claim 60, wherein
the first encoding parameter is set to be equal to a weighted sum of the parameters for which the first prediction errors satisfy the first condition and third weighting coefficients.

**62.** The method of claim 61, further comprising:
determining the corresponding third weighting coefficient based on the first prediction error corresponding to the parameter for which the first prediction error satisfies the first condition; or setting the third weighting coefficients to preset constant values.

**63.** The method of claim 51, wherein the determining the first encoding parameter based on the parameter(s) for which the first prediction error(s) satisfy the first condition corresponding to the template region comprises:

extending the parameter(s) for which the first prediction error(s) satisfy the first condition to obtain first extended parameter(s); and
fusing the first extended parameter(s) and/or the parameter(s) for which the first prediction error(s) satisfy the first condition to obtain the first encoding parameter.

**64.** The method of claim 45, wherein
the first encoding parameter is set to be equal to a weighted sum of the candidate first encoding parameters and fourth weighting coefficients.

**65.** The method of claim 64, further comprising:
determining the fourth weighting coefficient for the corresponding candidate first encoding parameter based on the first prediction error.

**66.** The method of claim 46, wherein the first condition comprises: the first prediction error being minimal, the first prediction error being less than a first threshold, the first prediction error being maximal, or the first prediction error being greater than a third threshold.

**67.** The method of claim 45, wherein determining the first encoding parameter based on the first prediction error(s) comprises:

determining, based on respective first prediction errors corresponding to the same candidate first encoding parameter for the template region, an evaluation parameter representing a performance of the candidate first encoding parameter; and
determining the first encoding parameter based on evaluation parameter(s) of the candidate first encoding parameter(s).

**68.** The method of claim 67, wherein
the evaluation parameter is set to be equal to a fused value of the respective first prediction errors corresponding to the same candidate first encoding parameter for the template region.

**69.** The method of claim 68, wherein
the evaluation parameter is set to be equal to a sum of the respective first prediction errors corresponding to the same candidate first encoding parameter for the template region.

**70.** The method of claim 67, wherein determining the first encoding parameter based on the evaluation parameter(s) of the candidate first encoding parameter(s) comprises:

selecting parameter(s) for which the evaluation parameter(s) satisfy a second condition from the candidate first encoding parameters; and
determining the first encoding parameter based on the parameter(s) for which the evaluation parameter(s) satisfy the second condition.

**71.** The method of claim 70, wherein

the first encoding parameter is set to be equal to the parameter for which the evaluation parameter satisfies the second condition; or
the first encoding parameter is set to be equal to a fused value of the parameters for which the evaluation parameters satisfy the second condition.

**72.** The method of claim 71, wherein
the first encoding parameter is set to be equal to a weighted sum of the parameters for which the evaluation parameters satisfy the second condition and fifth weighting coefficients.

**73.** The method of claim 72, further comprising:
determining, based on the template region corresponding to the parameter for which the evaluation parameter satisfies the second condition, the fifth weighting coefficient for the corresponding parameter.

**74.** The method of claim 73, wherein determining, based on the template region corresponding to the parameter for which the evaluation parameter satisfies the second condition, the fifth weighting coefficient for the corresponding parameter comprises:
determining, based on a number of samples and/or a template type of the template region corresponding to the parameter for which the evaluation parameter satisfies the second condition, the fifth weighting coefficient for the corresponding parameter.

**75.** The method of claim 72, wherein the fifth weighting coefficients are preset constant values.

**76.** The method of any one of claims 70 to 75, wherein the second condition comprises: the evaluation parameter being minimal, the evaluation parameter being less than a second threshold, the evaluation parameter being maximal, or the evaluation parameter being greater than a fourth threshold.

**77.** The method of claim 70, wherein determining the first encoding parameter based on the parameter(s) for which the evaluation parameter(s) satisfy the second condition comprises:

determining an eighth weighting coefficient based on the reference sample value of the first colour component of the current block and the parameter for which the evaluation parameter satisfies the second condition;

determining a fifth predicted value of the second colour component of the current block based on the eighth weighting coefficient and the reference sample value of the second colour component of the current block;
determining a fourth prediction error of the corresponding parameter for which the evaluation parameter satisfies the second condition based on the fifth predicted value and an original value of the second colour component of the current block; and
determining the first encoding parameter based on fourth prediction error(s) of the candidate first encoding parameter(s).

**78.** The method of claim 77, wherein determining the first encoding parameter based on the fourth prediction error(s) of the candidate first encoding parameter(s) comprises:

extending the parameter for which the evaluation parameter satisfies the second condition to obtain a second extended parameter;
determining a ninth weighting coefficient based on the reference sample value of the first colour component of the current block, the parameter for which the evaluation parameter satisfies the second condition, and the second extended parameter;
determining a sixth predicted value of the second colour component of the current block based on the ninth weighting coefficient and the reference sample value of the second colour component of the current block;
determining a fifth prediction error of the corresponding parameter based on the sixth predicted value and an original value of the second colour component of the current block; and
determining the first encoding parameter based on fifth prediction error(s) of the candidate first encoding parameter(s) and second extended parameter(s).

**79.** The method of claim 40, further comprising:
determining the template region based on a template type comprised in a configured prediction mode.

**80.** The method of claim 79, wherein the template type comprises at least one of: an above template, a left template, an above right template, a below left template, or an above left template.

**81.** The method of claim 80, wherein determining the template region based on the template type comprised in the configured prediction mode comprises:
taking a template comprised in the configured prediction mode as the template region.

**82.** The method of claim 40, further comprising:

determining the template region based on sample availability of a neighbouring region of the current block;
wherein based on a relative positional relationship with the current block, the neighbouring region comprises at least one of: a top region of the current block, a left region of the current block, a top right region of the current block, a bottom left region of the current block, or a top left region of the current block.

**83.** The method of claim 40, further comprising:
taking, when the template region does not exist, a default value as a predicted value of the second colour component of the current block.

**84.** The method of claim 40, further comprising:
determining, when the template region does not exist, a predicted value of the second colour component of the current block by another prediction method different from the method.

**85.** The method of claim 45, wherein
a second predicted value for determining the first prediction error is set to be equal to a second predicted value obtained by performing a refinement operation on the second predicted value of the second colour component of the template region.

**86.** The method of claim 40, further comprising:

obtaining an original value of the second colour component of the current block;
determining a residual value of the second colour component of the current block based on the original value of the second colour component of the current block and the first predicted value of the second colour component;

and
encoding the residual value of the second colour component of the current block, and signalling obtained encoded bits in a bitstream.

**87.** The method of claim 40, further comprising:

performing a refinement operation on the first predicted value of the second colour component of the current block to obtain a refined first predicted value;
obtaining an original value of the second colour component of the current block;
determining a residual value of the second colour component of the current block based on the original value of the second colour component of the current block and the refined first predicted value; and
encoding the residual value of the second colour component of the current block, and signalling obtained encoded bits in a bitstream.

**88.** The method of claim 40, further comprising:
encoding the first encoding parameter or an index of the first encoding parameter, and signalling obtained encoded bits in a bitstream.

**89.** An encoding apparatus, comprising:

a first determination module, configured to determine a first encoding parameter based on a template region;
a second determination module, configured to determine a reference sample value of a first colour component of a current block;
a third determination module, configured to determine a first weighting coefficient based on the reference sample value of the first colour component of the current block and the first encoding parameter; and
a first prediction module, configured to determine a first predicted value of a second colour component of the current block based on the first weighting coefficient and a reference sample value of the second colour component of the current block.

**90.** An encoding device, comprising a first memory and a first processor, wherein

the first memory is configured to store a computer program executable on the first processor; and
the first processor is configured to perform, when executing the computer program, the method of any one of claims 40 to 88.

**91.** A decoding apparatus, comprising:

a fourth determination module, configured to determine a first decoding parameter based on a template region;
a fifth determination module, configured to determine a reference sample value of a first colour component of a current block;
a sixth determination module, configured to determine a first weighting coefficient based on the reference sample value of the first colour component of the current block and the first decoding parameter; and
a second prediction module, configured to determine a first predicted value of a second colour component of the current block based on the first weighting coefficient and a reference sample value of the second colour component of the current block.

**92.** A decoding device, comprising a second memory and a second processor, wherein

the second memory is configured to store a computer program executable on the second processor; and
the second processor is configured to perform, when executing the computer program, the method of any one of claims 1 to 39.

**93.** A computer-readable storage medium having stored a computer program thereon, wherein the computer program, when executed, implements the method of any one of claims 1 to 39, or implements the method of any one of claims 40 to 88.

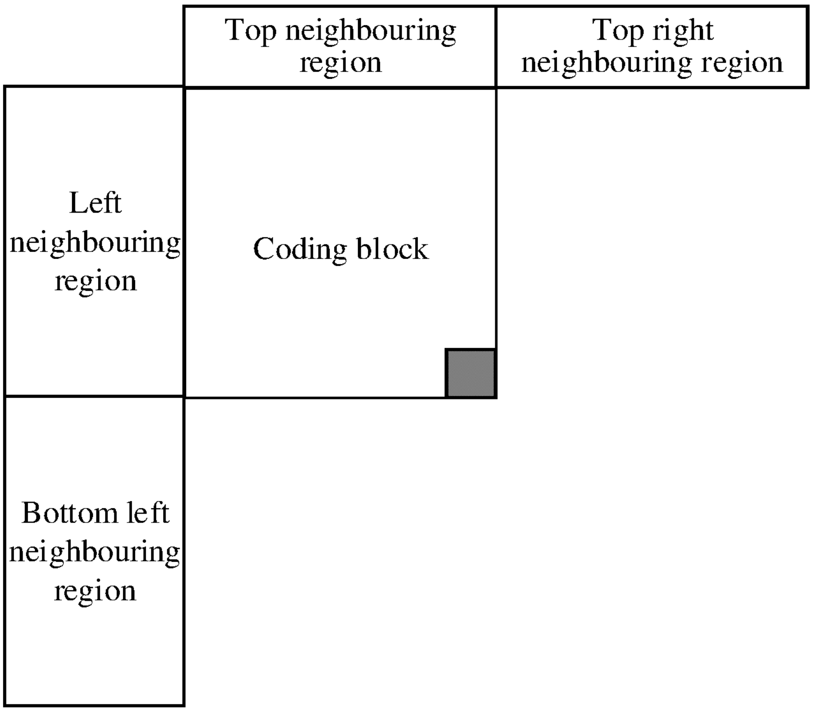
Top neighbouring region
Top right neighbouring region
Left neighbouring region
Coding block
Bottom left neighbouring region

FIG. 1

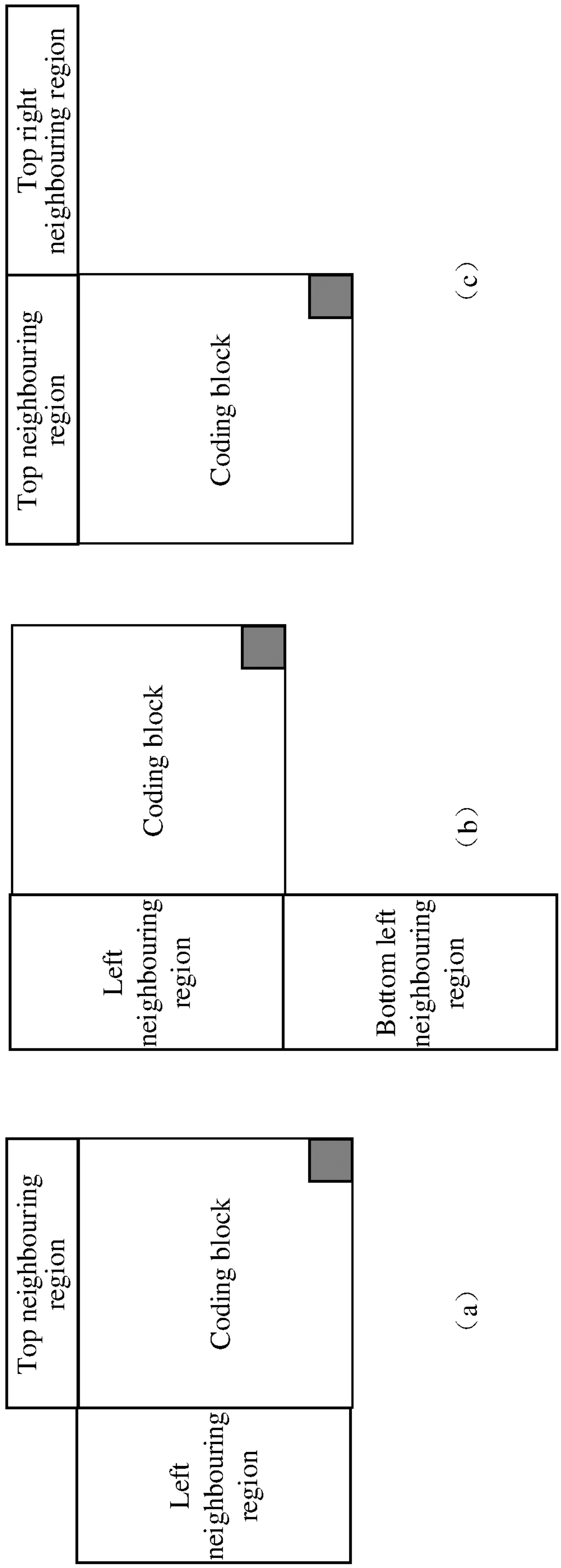
Top neighbouring region
Coding block
Left neighbouring region
(a)
Left neighbouring region
Bottom left neighbouring region
Coding block
(b)
Top neighbouring region
Top right neighbouring region
Coding block
(c)

FIG. 2

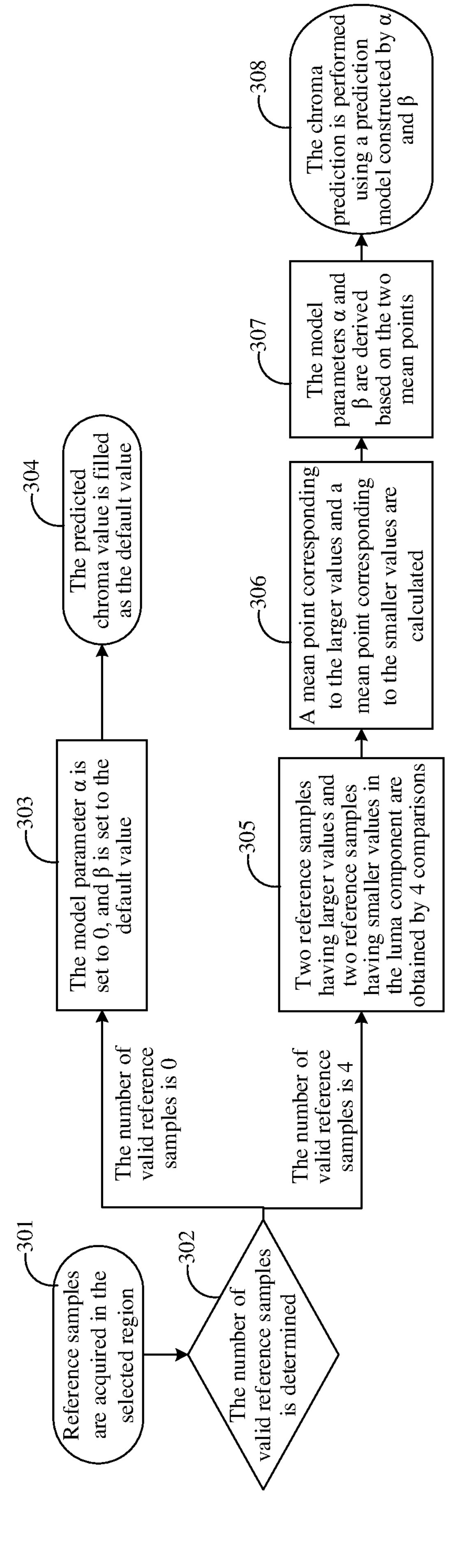
301
Reference samples are acquired in the selected region
302
The number of valid reference samples is determined
The number of valid reference samples is 0
303
The model parameter α is set to 0, and β is set to the default value
304
The predicted chroma value is filled as the default value
The number of valid reference samples is 4
305
Two reference samples having larger values and two reference samples having smaller values in the luma component are obtained by 4 comparisons
306
A mean point corresponding to the larger values and a mean point corresponding to the smaller values are calculated
307
The model parameters α and β are derived based on the two mean points
308
The chroma prediction is performed using a prediction model constructed by α and β

FIG. 3

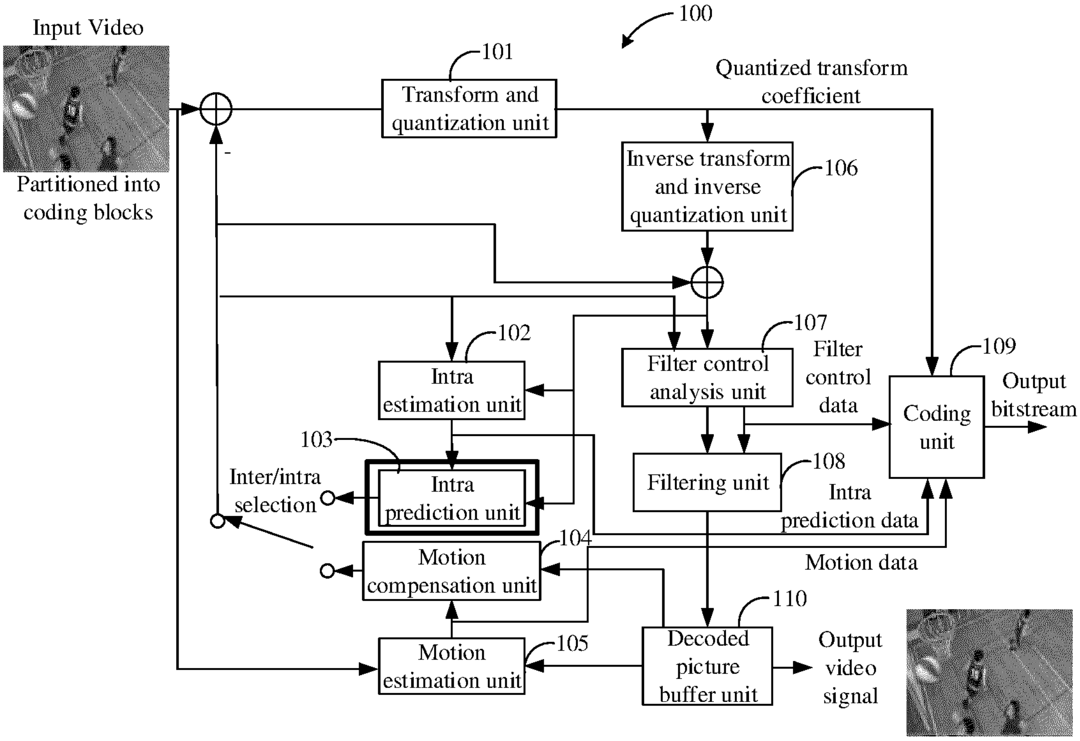
100
Input Video
Partitioned into coding blocks
101
Transform and quantization unit
Quantized transform coefficient
Inverse transform and inverse quantization unit
106
102
Intra estimation unit
107
Filter control analysis unit
Filter control data
109
Coding unit
Output bitstream
103
Inter/intra selection
Intra prediction unit
Filtering unit
108
Intra prediction data
104
Motion compensation unit
Motion data
110
Motion estimation unit
105
Decoded picture buffer unit
Output video signal

**FIG. 4A**

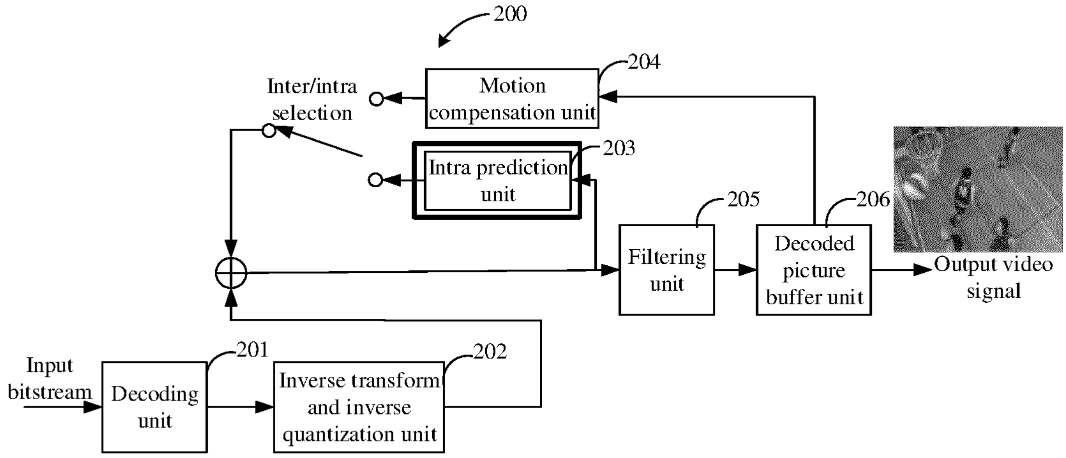
200
Inter/intra selection
Motion compensation unit
204
Intra prediction unit
203
205
Filtering unit
206
Decoded picture buffer unit
Output video signal
Input bitstream
Decoding unit
201
Inverse transform and inverse quantization unit
202

**FIG. 4B**

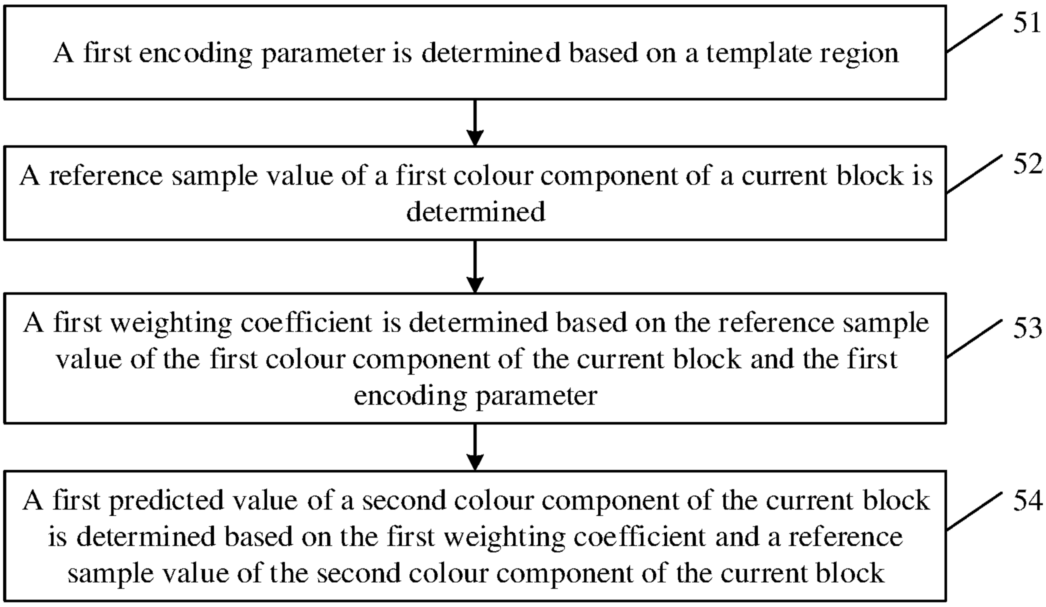


**FIG. 5**

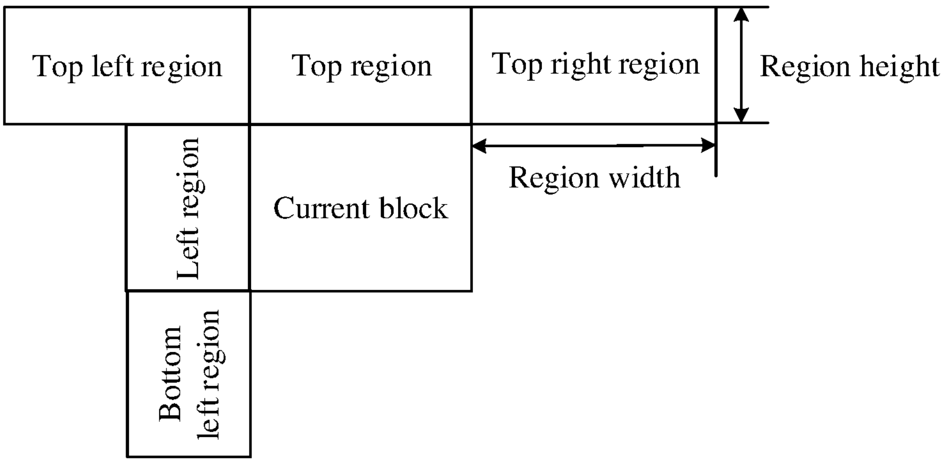


**FIG. 6**

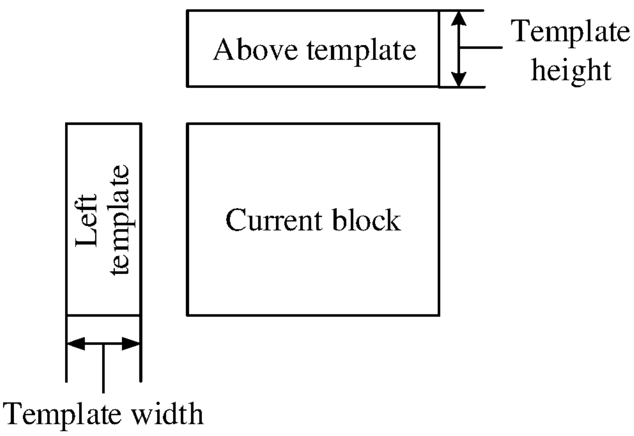


**FIG. 7**

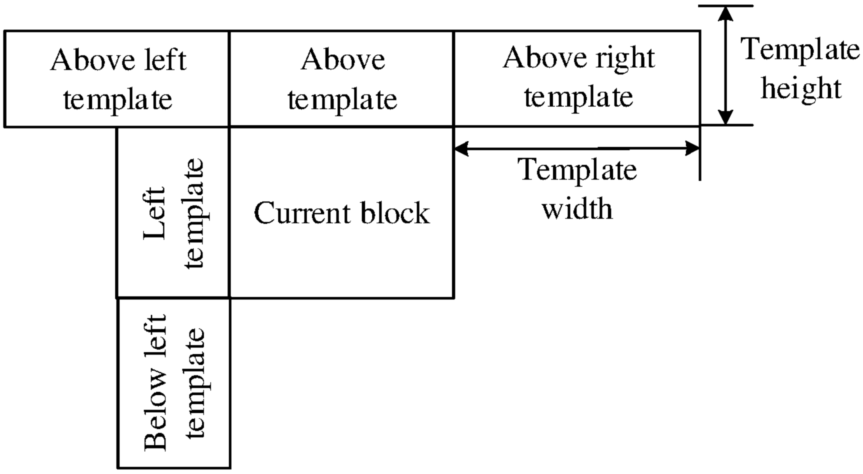


FIG. 8

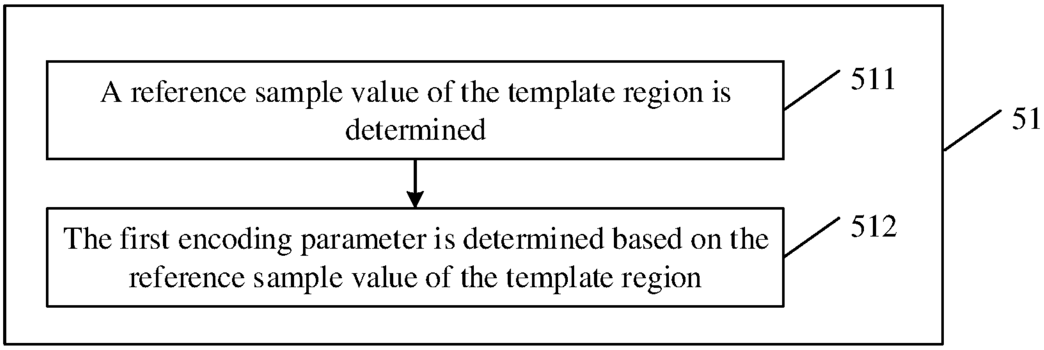


FIG. 9

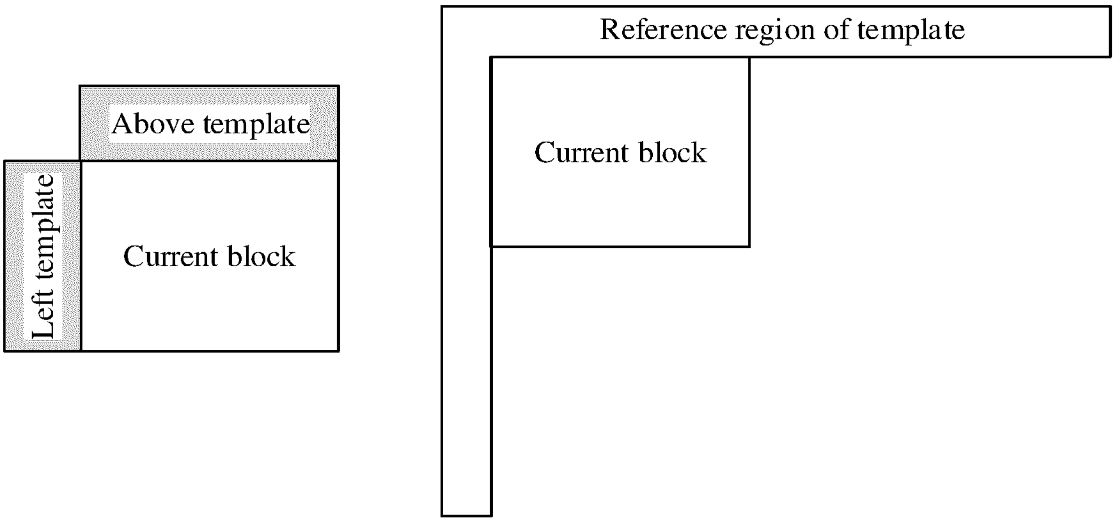


FIG. 10

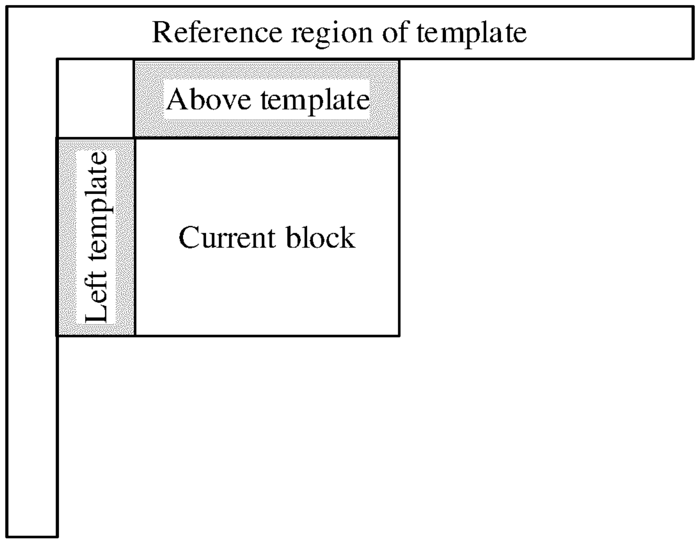


**FIG. 11**

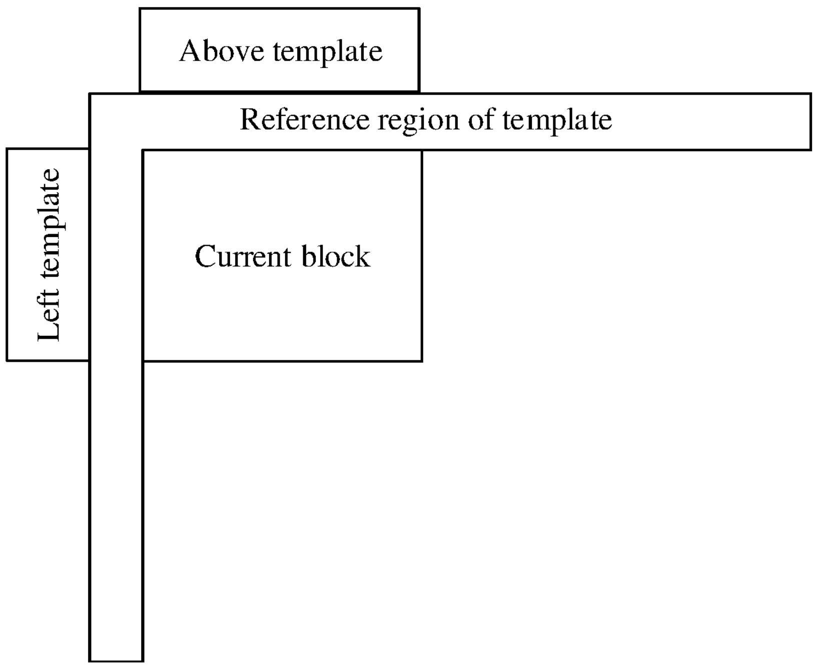


**FIG. 12A**

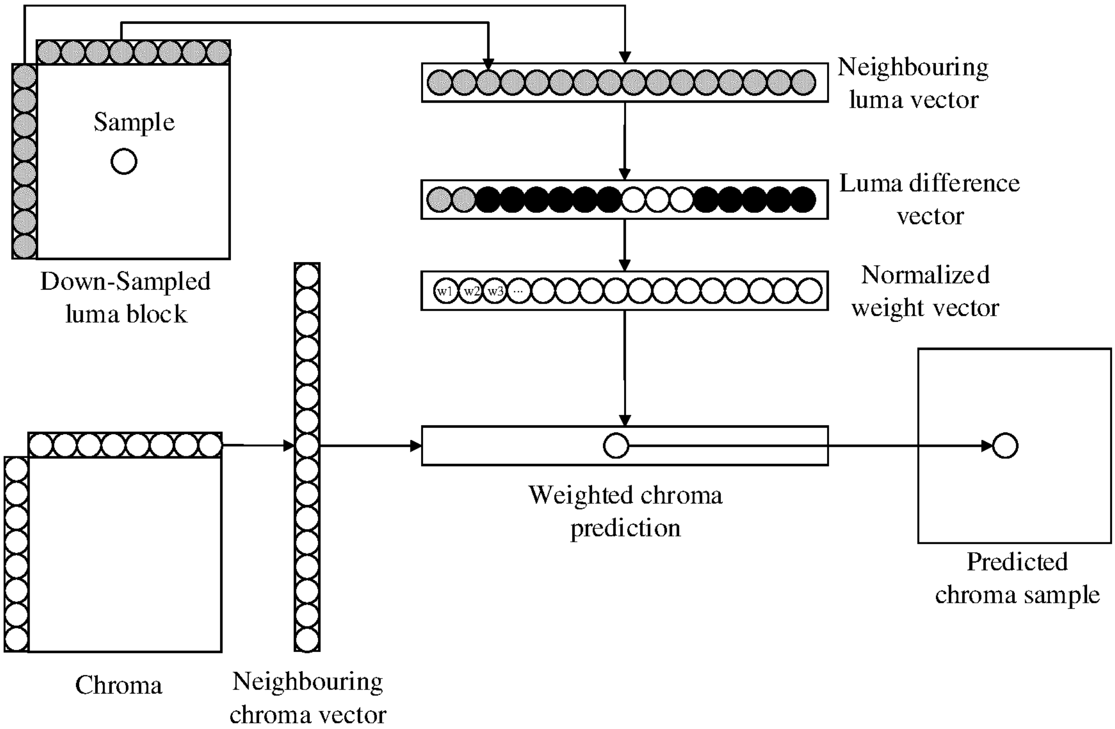


**FIG. 12B**

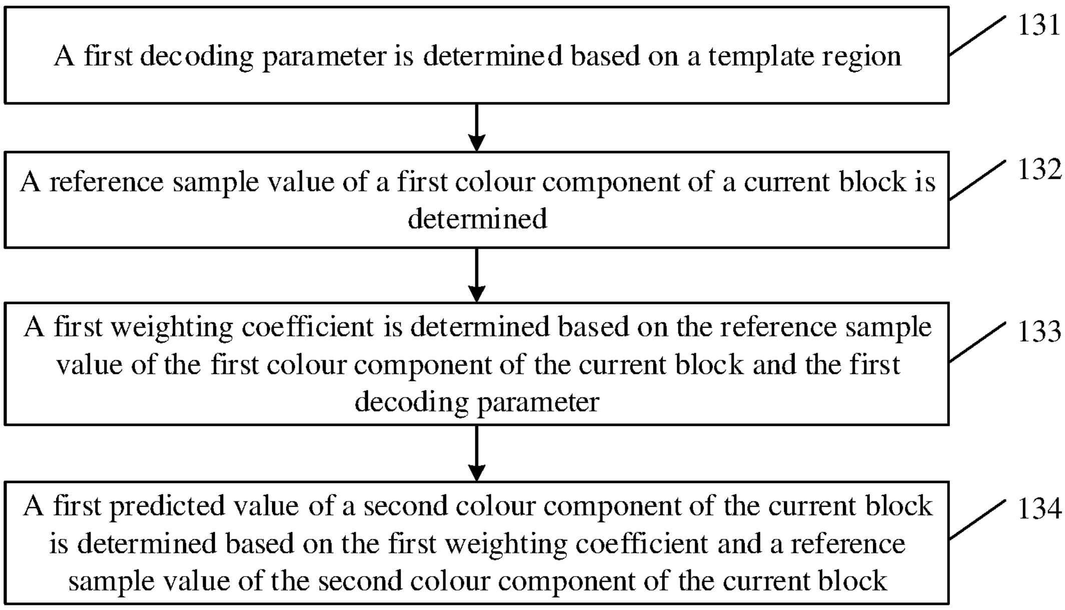


**FIG. 13**

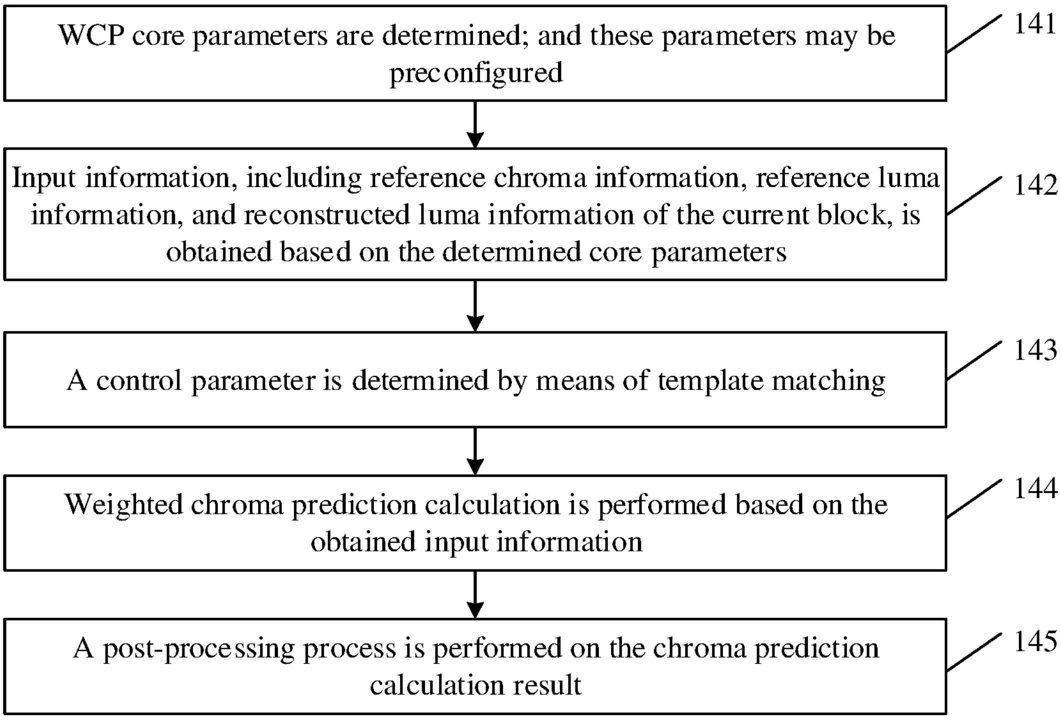
WCP core parameters are determined; and these parameters may be preconfigured
141
Input information, including reference chroma information, reference luma information, and reconstructed luma information of the current block, is obtained based on the determined core parameters
142
A control parameter is determined by means of template matching
143
Weighted chroma prediction calculation is performed based on the obtained input information
144
A post-processing process is performed on the chroma prediction calculation result
145

FIG. 14

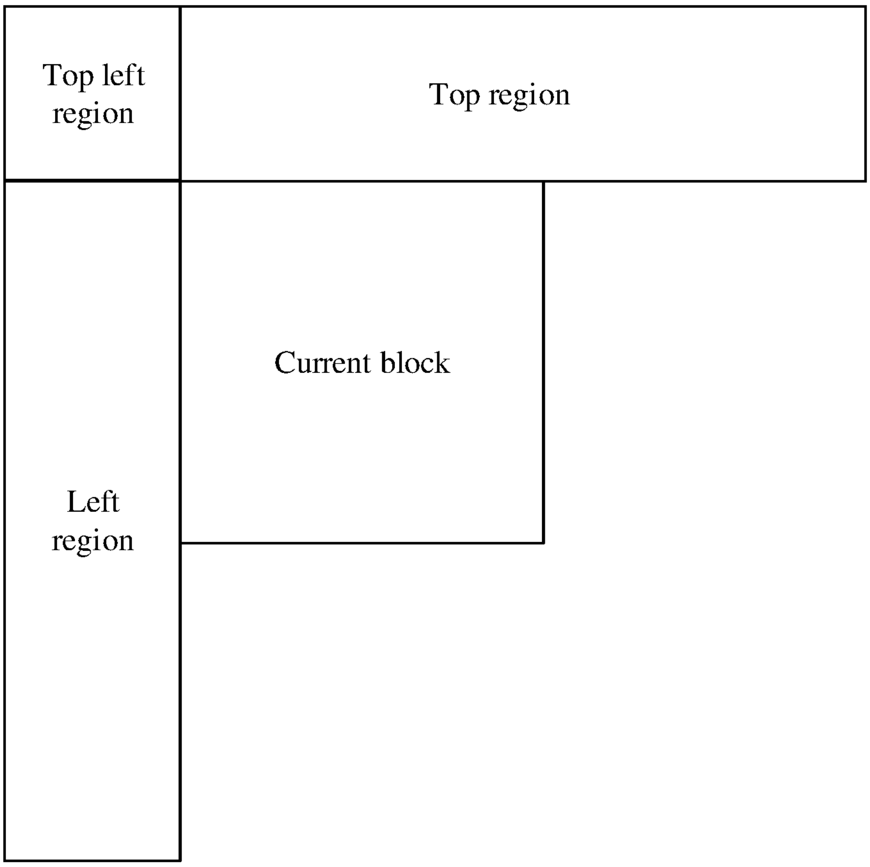
Top left region
Top region
Current block
Left region

FIG. 15

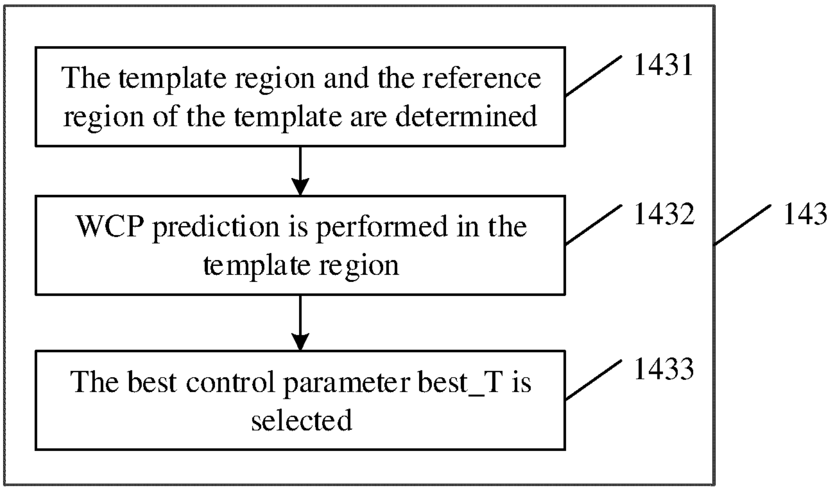
The template region and the reference region of the template are determined
1431
WCP prediction is performed in the template region
1432
143
The best control parameter best_T is selected
1433

FIG. 16

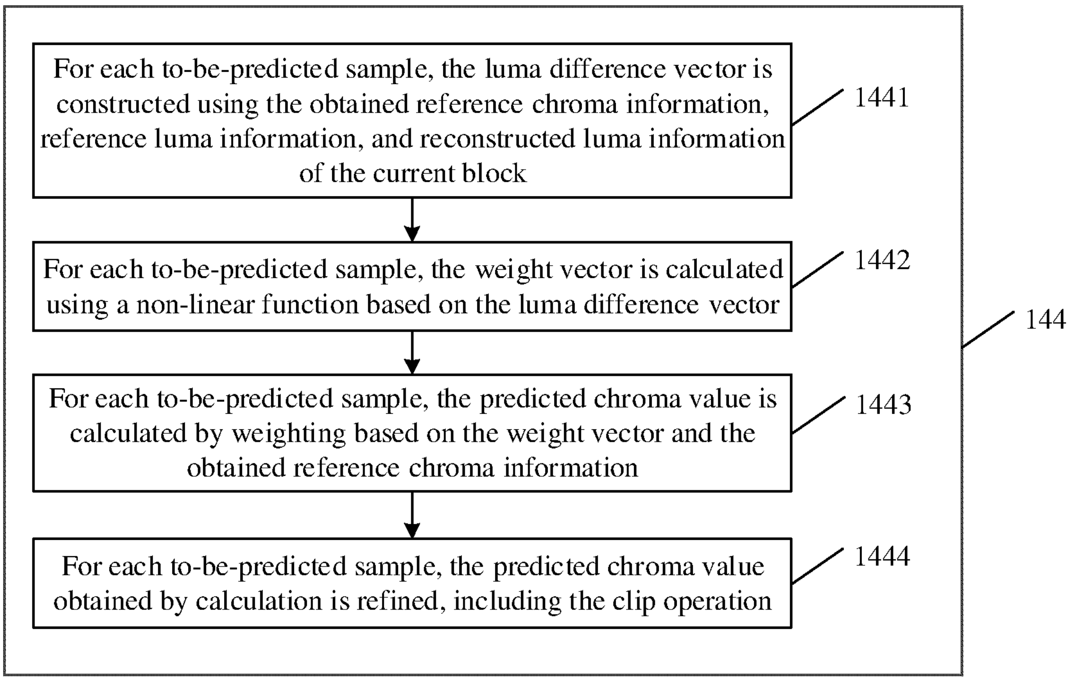
For each to-be-predicted sample, the luma difference vector is constructed using the obtained reference chroma information, reference luma information, and reconstructed luma information of the current block
1441
For each to-be-predicted sample, the weight vector is calculated using a non-linear function based on the luma difference vector
1442
144
For each to-be-predicted sample, the predicted chroma value is calculated by weighting based on the weight vector and the obtained reference chroma information
1443
For each to-be-predicted sample, the predicted chroma value obtained by calculation is refined, including the clip operation
1444

FIG. 17

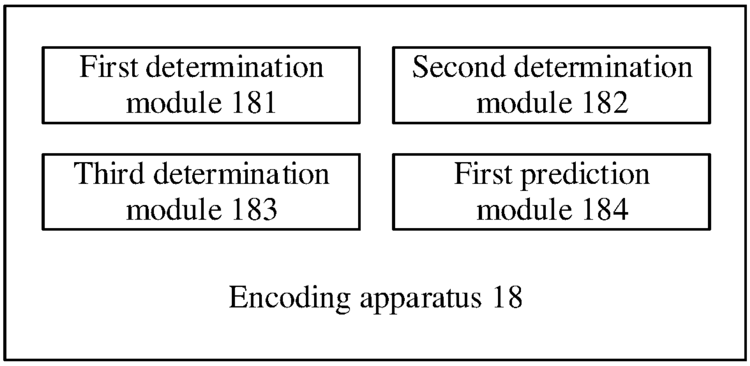


FIG. 18

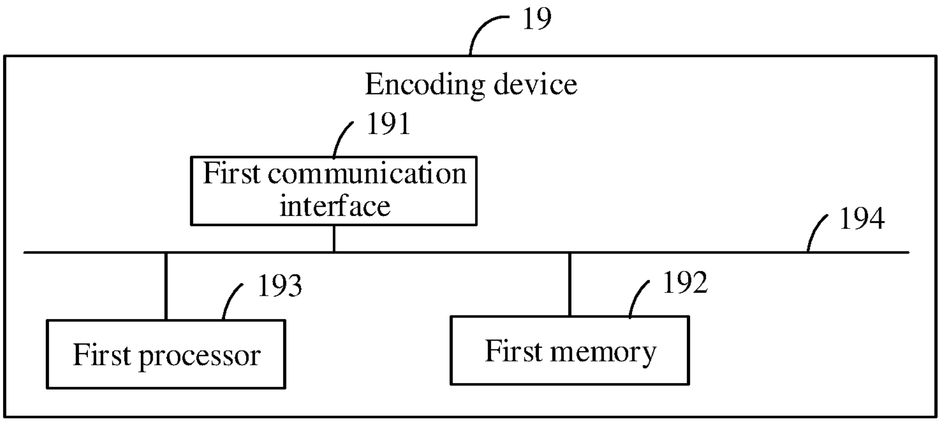


FIG. 19

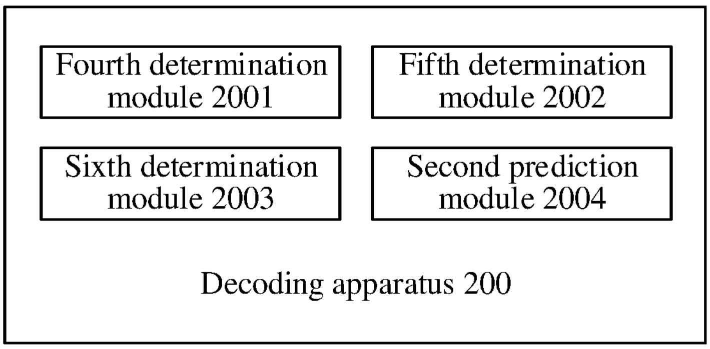


FIG. 20

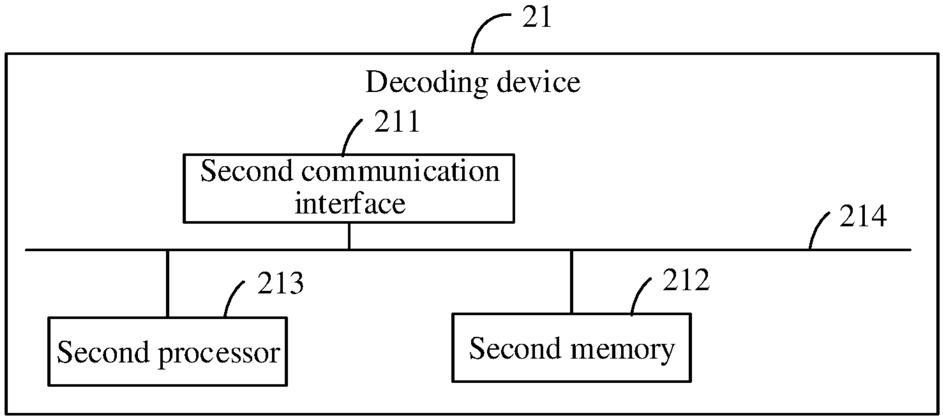
21
Decoding device
211
Second communication interface
214
213
212
Second processor
Second memory

FIG. 21

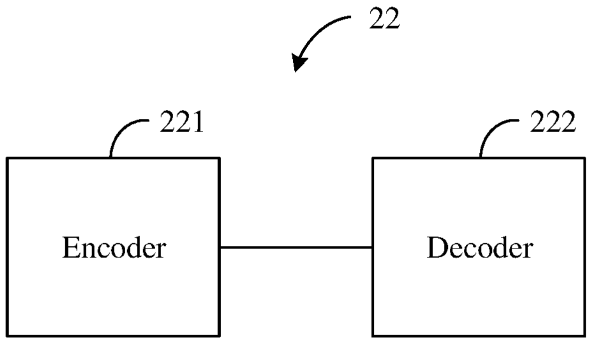
22
221
222
Encoder
Decoder

FIG. 22

**INTERNATIONAL SEARCH REPORT**

International application No. **PCT/CN2022/086470**

**A. CLASSIFICATION OF SUBJECT MATTER**

H04N 19/82(2014.01)i

According to International Patent Classification (IPC) or to both national classification and IPC

**B. FIELDS SEARCHED**

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

CNPAT; CNKI; WPI; EPODOC; IEEE; JVET: 霍俊彦, 编码, 解码, 模板, 参数, 颜色分量, 色度, 亮度, 参考, 加权, 权值, 预测, 模型, VVC, CCLM, WCP, softmax, color, colour, chroma, weight, predict+, bright+, light+, lumi+, luma, cod+, encod+, decod+, model, reference

**C. DOCUMENTS CONSIDERED TO BE RELEVANT**

| Category* | Citation of document, with indication, where appropriate, of the relevant passages | Relevant to claim No. |
|---|---|---|
| A | CN 114303369 A (KT CORP.) 08 April 2022 (2022-04-08)<br>description, pages 13-25 | 1-93 |
| A | CN 101335902 A (HUAWEI TECHNOLOGIES CO., LTD.) 31 December 2008 (2008-12-31)<br>entire document | 1-93 |
| A | CN 113475063 A (INTELLECTUAL DISCOVERY CO., LTD.) 01 October 2021 (2021-10-01)<br>entire document | 1-93 |
| A | CN 114299193 A (SHANDONG UNIVERSITY) 08 April 2022 (2022-04-08)<br>entire document | 1-93 |
| A | CN 113365067 A (SUN YAT-SEN UNIVERSITY) 07 September 2021 (2021-09-07)<br>entire document | 1-93 |
| A | WO 2015146278 A1 (SONY CORP.) 01 October 2015 (2015-10-01)<br>entire document | 1-93 |

☑ Further documents are listed in the continuation of Box C. ☑ See patent family annex.

* Special categories of cited documents:

"A" document defining the general state of the art which is not considered to be of particular relevance

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **08 November 2022** | **15 December 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.
**PCT/CN2022/086470**

**C. DOCUMENTS CONSIDERED TO BE RELEVANT**

| Category* | Citation of document, with indication, where appropriate, of the relevant passages | Relevant to claim No. |
|---|---|---|
| A | HUO, Junyan et al. "Unified Cross-Component Linear Model in VVC Based on a Subset of Neighboring Samples" *IEEE TRANSACTIONS ON INDUSTRIAL INFORMATICS,* 15 February 2022 (2022-02-15), entire document | 1-93 |

Form PCT/ISA/210 (second sheet) (January 2015)

**INTERNATIONAL SEARCH REPORT**
**Information on patent family members**

International application No.
**PCT/CN2022/086470**

| Patent document cited in search report | Publication date (day/month/year) | Patent family member(s) | Publication date (day/month/year) |
|---|---|---|---|
| CN 114303369 A | 08 April 2022 | US 2022295056 A1 | 15 September 2022 |
| | | WO 2021040458 A1 | 04 March 2021 |
| | | KR 20210027173 A | 10 March 2021 |
| | | IN 202217016698 A | 08 July 2022 |
| CN 101335902 A | 31 December 2008 | None | |
| CN 113475063 A | 01 October 2021 | US 2022070452 A1 | 03 March 2022 |
| | | WO 2020139039 A1 | 02 July 2020 |
| | | KR 20200081327 A | 07 July 2020 |
| | | IN 202117032865 A | 29 October 2021 |
| CN 114299193 A | 08 April 2022 | None | |
| CN 113365067 A | 07 September 2021 | None | |
| WO 2015146278 A1 | 01 October 2015 | JP 2015192381 A | 02 November 2015 |
| | | US 2017034525 A1 | 02 February 2017 |

Form PCT/ISA/210 (patent family annex) (January 2015)